# NEUE EUROPÄISCHE PATENTSCHRIFT

(11) **EP 1 225 193 B2**
(45) Veröffentlichungstag und Bekanntmachung des Hinweises auf die Entscheidung über den Einspruch: **11.08.2010**
(45) Hinweis auf die Patenterteilung: 26.07.2006
(21) Anmeldenummer: 02001203.5
(22) Anmeldetag: 16.01.2002
(51) Int. Cl.: C08G 73/10, C08L 79/08

(54) **Zusammensetzungen für die Herstellung von Formkörpern aus feinteiligen Materialien**
Compositions for preparation of shapes of finally divided materials
Compositions pour la préparation de formes de matériaux finement divisés

(30) Priorität: 17.01.2001 DE 10101944
(43) Veröffentlichungstag der Anmeldung: 24.07.2002
(73) Patentinhaber: BASF SE, 67056 Ludwigshafen (DE)
(72) Erfinder: Kroner, Matthias, 67304 Eisenberg (DE); Gerst, Matthias, 67433 Neustadt (DE); Reck, Bernhard, 67269 Grünstadt (DE)
(74) Vertreter: Reitstötter - Kinzebach

(56) Entgegenhaltungen:
- DE-A- 4 323 191
- US-A- 1 801 052
- US-A- 1 801 053
- US-A- 2 215 825
- US-A- 3 657 166
- US-A- 5 478 919
- US-A- 5 547 541
- US-A- 5 548 036
- US-A- 5 610 255
- US-A- 5 633 298
- US-A- 5 643 978
- US-A- 5 925 728

## Beschreibung

Die vorliegende Erfindung betrifft die Verwendung von Zusammensetzugen, die Umsetzungsprodukte von niedermolekularen Di oder Tricarbonsäuren mit Ammoniak enthalten, zur Herstellung von Formkörpern aus feinteiligen Materialien.

Die Herstellung von Formkörpern aus feinteiligen Materialien wie Faserplatten oder Spanplatten etc. sowie die Herstellung von Flächengebilden aus Fasermaterialien, beispielsweise Faservliesen, Fasermatten, erfolgt häufig unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Bindemittel auf Basis von Phenol-Formaldehydharzen sind beispielsweise aus der US 4,612,224 bekannt. Die WO 94/20661 beschreibt vernetzbare Dispersionspulver und deren Verwendung als Bindemittel für Fasern, welche als vernetztende Komponente N-Methylolamid-Gruppen aufweisen. Beim Vernetzen setzen diese Gruppen Formaldehyd frei.

Bindemittelbedingte Formaldehydemissionen sind jedoch nicht zuletzt aus arbeitshygienischen Gründen problematisch. Zur Vermeidung der Formaldehyd-Emissionen wurden bereits zahlreiche Alternativen vorgeschlagen. So sind aus der US 4,076,917 Bindemittel bekannt, welche Carbonsäure- oder Carbonsäureanhydrid-haltige Polymerisate und β-Hydroxyalkylamide als Vernetzer enthalten. Nachteilig ist die aufwendige Herstellung der β-Hydroxyalkylamide. Ähnliche Bindemittel sind aus der EP-A 583 086 bekannt.

Aus der EP-A 445 578 sind Platten aus feinteiligen Materialien wie Glasfasern bekannt, die als Bindemittel eine Zusammensetzung aus hochmolekularen Polycarbonsäuren und mehrwertigen Alkoholen, Alkanolaminen und/oder mehrwertigen Aminen enthalten. Die Wasserfestigkeit der erhaltenen Platten ist jedoch nicht zufriedenstellend.

Die WO 99/09100 beschreibt die Verwendung von thermisch härtbaren wässrigen Zusammensetzungen, die wenigstens ein Polymerisat mit geringem Säuregruppen-Anteil, ein Säuregruppen-reiches Polymerisat und wenigstens ein Alkanolamin mit zwei Hydroxylgruppen enthalten, als Bindemittel für Formkörper aus feinteiligen Materialien.

Die WO 99/02591 beschreibt thermisch härtbare Zusammensetzungen, die ein in Gegenwart eines Carboxylgruppen-reichen Polymerisatshergestelltes Polymerisat mit geringem Säuregruppenanteil und ein oberflächenaktives Amin enthalten, und deren Verwendung als Bindemittel für Formkörper aus feinteiligen Materialien.

Bei den Formaldehyd-freien Bindemittelsystemen des Standes der Technik handelt es sich regelmässig um Polymersysteme. Diese weisen in der Regel eine hohe Verarbeitungsviskosität auf was bei der Herstellung von Formkörpern aus feinteiligen Materialen oftmals eine gleichmässige Einmischung der Bindemittel in das zu bindende Substrat erschwert und beim Formungsvorgang zu Inhomogenitäten und damit zu einer geringern mechanischen Festigkeit des Formkörpers führt. Ausserdem sind diese Bindemittelsysteme vergleichsweise kostspielig, da die Polymerkomponente in der Regel einen zusätzlichen Herstellungsschritt erfordert.

Aus der WO 94/15993 ist die Herstellung von Polymeren der Asparaginsäure durch thermische Kondensation von Halbamiden der Fumarsäure, der Maleinsäure oder von Ammoniumsalzen der Halbamide dieser Säuren bekannt. Aus der WO 95/02007 ist bekannt, dass die zur Herstellung der Asparaginsäure-Polymere benötigten Halbamide und deren Ammoniumsalze in situ durch Umsetzung der Säureanhydride mit einer Ammoniak liefernden Komponente hergestellt werden können.

Der vorliegenden Erfindung liegt die Aufgabe zugrunde, ein Bindemittelsystem für feinteilige Materialen bereitzustellen, das bei der Verarbeitung nicht zu Formaldehyd-Emissionen führt, das kostengünstig ist und mit dem Formkkörper oder verfestigte Flächengebilde aus Fasermaterialenen hergestellt werden können.

Überraschenderweise wird diese Aufgabe gelöst durch Zusammensetzungen, die ein Umsetzungsprodukt aus einer Di- oder Tricarbonsäure oder deren Anhydrid mit Ammoniak und gegebenenfalls einem primären Amin und/oder einem Amin oder Amid mit wenigstens zwei Hydroxy-C₂-C₄-alkylgruppen, bzw. als Vorläufer dieses Umsetzungsprodukts, eine Mischung dieser Di- oder Tricarbonsäure oder deren Anhydrid mit einer Substanz, welche beim Erwärmen Ammoniak freisetzt, enthalten.

Demnach betrifft die vorliegende Erfindung die Verwendung von Zusammensetzungen, die
- wenigstens ein Umsetzungsprodukt aus
   i. wenigstens einer Polycarbonsäure der allgemeinen Formel I: 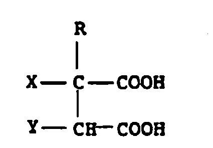 worin
      - R: für Wasserstoff oder eine Gruppe CH₂COOH steht,
      - X: OH oder NH₂ bedeutet, wenn Y für Wasserstoff steht,
      - Y: OH oder NH₂ bedeutet, wenn X für Wasserstoff steht, oder
      X und Y gemeinsam für eine π-Bindung stehen,
      und/oder einem Anhydrid der Polycarbonsäure I mit
   ii. Ammoniak und gegebenenfalls mit
   iii. primären Aminen und/oder Aminen oder Amiden mit wenigstens zwei Hydroxy-C₂-C₄-alkylgruppen;
   und/oder
- eine Mischung aus wenigstens einer Polycarbonsäure der allgemeinen Formel I und/oder ihrem Anhydrid und wenigstens einer beim Erwärmen Ammoniak freisetzenden Substanz und gegebenenfalls primären Aminen und/oder Verbindungen mit wenigstens zwei Hydroxylgruppen;
enthalten, als termisch härtbares Bindemittel zur Herstellung von Formkörpern aus feinteiligen Materialien und zum Verfestigen von Flächengebilden aus Fasermaterialien.

Die Erfindung betrifft auch ein Verfahren zur Herstellung von Formkörpern aus feinteiligen Materialien und von verfestigten Flächengebilden aus Fasermaterialien unter Verwendung dieser Zusammensetzungen. Die Erfindung betrifft ausserdem die nach diesen Verfahren erhältlichen Formkörper und Flächengebilde. Die Erfindung betrifft weiterhin thermisch härtbare Zusammensetzung, die neben den vorgenannten Bestandteilen wenigstens einen weiteren Bestandteil enthalten, der ausgewählt ist unter feinteiligen filmbildenden Polymerisaten ethylenisch ungesättigter Monomere.

Erfindungsgemäss geeignet sind grundsätzlich alle denkbaren Umsetzungsprodukte der Polycarbonsäuren I oder ihrer Anhydride mit Ammoniak. Zu diesen Umsetzungsprodukten zählen sowohl die Mono-Bis- und Trisamide der Polycarbonsäuren I, in denen eine (Halbamide), zwei oder alle Carboxylgruppen in Carboxamid-Gruppen umgewandelt wurden. Hierzu zählen auch die Mono-, Bis- und Trisammoniumsalze der Polycarbonsäuren I sowie die Mono- und Bisammoniumsalze der Mono- bzw. Bisamide von I. Geeignete Polycarbonsäuren I sind die ungesättigten Di- und Tricarbonsäuren: Maleinsäure, Fumarsäure und Aconitsäure; die Hydroxygruppentragenden Di- und Tricarbonsäuren: Äpfelsäure und Zitronensäure; sowie die Aminogruppen-tragende Dicarbonsäure: Asparaginsäure. Geeignete Anhydride sind die intramolekularen Anhydride von I, beispielsweise Maleinsäureanhydrid.

Man nimmt an, ohne die Erfindung durch eine Theorie einschränken zu wollen, dass die oben definierten Zusammensetzungen beim Erwärmen analog den in der EP-B 677 080, S. 4 und 5 gezeigten Schemata zu Oligomeren bzw. Polymeren mit Amid- und oder cyclischen Imidgruppen kondensieren. Letztere sind vermutlich für die Festigkeit der Formkörper und Flächengebilde verantwortlich. Es wird vermutet, dass beim Erwärmen zunächst eine Polymerisation der Halbamide der ethylenisch ungesättigten Polycarbonsäuren Ia (Halbamid der Polycarbonsäuren I, in denen X und Y gemeinsam für eine π-Bindung stehen) stattfindet, bei der der Stickstoff der Amidgruppe an die ethylenisch ungesättigte Doppelbindung von Ia addiert. Das dabei zunächst entstehende Oligomer mit Amid-Strukturelementen II reagiert bei verlängerter Wärmeeinwirkung und/oder Erhöhung der Temperatur unter intramolekularer Kondensation zu einem Polymer mit cyclischen Imid-Gruppen III. Die intramolekulare Kondensation beginnt in der Regel bei Temperaturen oberhalb 120°C, vorzugsweise oberhalb 130°C, und findet in verstärktem Ausmaß bei Temperaturen ab 140°C, insbesondere ab 150°C und besonders bevorzugt ab 160°C, statt. Die Reaktion wird in Schema 1 am Beispiel der Reaktion eines ethylenisch ungesättigten Dicarbonsäure-Halbamids Ia veranschaulicht.

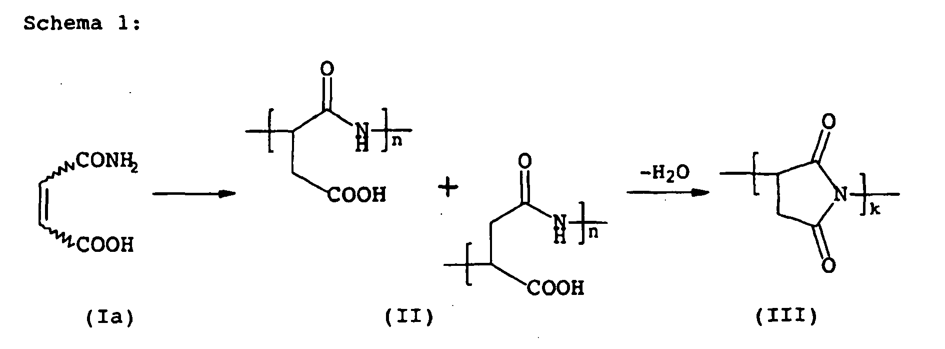

In ähnlicher Weise polymerisieren auch die Ammoniumsalze der Halbamide, wie in Schema 2 am Beispiel des Ammoniumsalzes des Halbamids Ia' gezeigt wird. In Schema 1 und 2 stehen die Variablen n und k für die Anzahl der Wiederholungseinheiten im Oligomer und liegen bei den Oligomeren mit Struktureinheiten der Formeln II' bzw. II" vorzugsweise im Bereich von 2 bis 100.

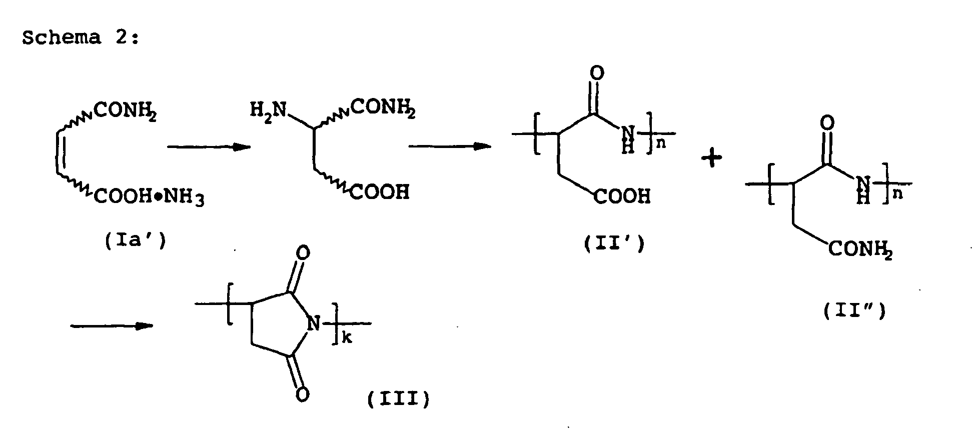

Polymere, die im Wesentlichen aus den cyclischen Imid-Teilstrukturen (vgl. Formel III) aufgebaut sind, bilden vermutlich das eigentliche Bindemittel, wobei je nach Anwendungszweck auch Polymere geeignet sind, die überwiegend aus Strukturelementen der Formel II bzw. II' und/oder II" aufgebaut sind, und/oder deren Polymerketten über diese Säure- bzw. Amidgruppen vernetzt sind.

Neben den Halbamiden und Amiden ethylenisch ungesättigter Polycarbonsäuren Ia sind auch Vorläufer dieser (Halb)amide geeignet, aus denen durch Abspaltung von Ammoniak oder Wasser die Halbamide der ethylenisch ungesättigten Polycarbonsäuren Ia freigesetzt werden, beispielsweise die Diammoniumsalze der ungesättigten Polycarbonsäuren I oder die Halbamide sowie die (Di)Ammoniumsalze von Polycarbonsäuren I mit X oder Y = OH oder NH₂.

Geeignet sind somit auch Mischungen der vorgenannten Polycarbonsäuren I, vorzugsweise ihrer Anhydride, mit Substanzen, welche beim Erwärmen Ammoniak freisetzen, da die Polycarbonsäuren I mit Ammoniak zu den Halbamiden und deren Ammoniumsalzen reagieren.

Erfindungsgemäß bevorzugt sind die Mono- und Diamide der Fumarsäure und der Maleinsäure, die Mono- und Diammoniumsalze der Fumarsäure und der Maleinsäure sowie die Monoamid-Ammoniumsalze der Maleinsäure und der Fumarsäure. Erfindungsgemäss bevorzugt sind auch Mischungen der Fumarsäure und/oder der Maleinsäure mit Substanzen, welche beim Erwärmen Ammoniak abgeben.

Die Amide, Halbamide und Ammoniumsalze der Polycarbonsäuren I sind dem Fachmann grundsätzlich bekannt und teilweise kommerziell erhältlich, oder können in Analogie zu Verfahren des Standes der Technik, wie sie beispielsweise aus US 5292858, Liebigs Ann. Chem. 259, S.138, JP-A 74/35325, der DE-A 4300020 oder der DE-A 4427631 bekannt sind, durch Umsetzung von I, vorzugsweise dem Anhydrid von I, mit Ammoniak hergestellt werden, wobei man entsprechend der Stöchiometrie dieser Reaktion in der Regel ein Molverhältnis von Ammoniak zu Polycarbonsäure von wenigstens 1:1, insbesondere 1:1 bis 2:1 bei Dicarbonsäuren I und 1:1 bis 3:1 bei Tricarbonsäuren, wählt.

Vorzugsweise erfolgt die Herstellung der Halbamide von I und ihrer Ammoniumsalze durch Umsetzung der Polycarbonsäuren I oder vorzugsweise der Anhydride der Polycarbonsäuren I mit Ammoniak in einem Lösungsmittel, insbesondere einem aliphatischen Keton wie Aceton, Ethylmethylketon, Diethylketon, Cyclopentanon oder Cyclohexanon, oder in Mischungen dieser Ketone untereinander oder mit Wasser, gemäss den Angaben der DE-A 4427631, oder durch Einwirken von gasförmigem Ammoniak auf die feste oder geschmolzene Polycarbonsäure I oder auf ihr Anhydrid gemäß der technischen Lehre der DE-A 4300020. Auf die Offenbarung der beiden Schriften wird hiermit Bezug genommen.

Als thermisch härtbares Bindemittel im Sinne der Erfindung kommen auch die oben beschriebenen wasserlöslichen Oligomere in Betracht, welches in der Regel durch Erwärmen eines Mono- oder Diamids, eines Mono- oder Diammoniumsalzes oder eines Monoamid-Ammoniumsalzes einer Polycarbonsäure der Formel I, vorzugsweise eines Monoamids, gegebenenfalls in Gegenwart eines primären Amins und/oder einem Amin oder Amid mit wenigstens 2 Hydroxy-C₂-C₄-alkylgruppen erhältlich ist. Die erforderliche Temperatur zur Herstellung dieser Oligomere wird in der Regel 160°C nicht überschreiten, da dann in verstärktem Masse die Bildung von Polymeren mit cyclischen Imidstrukturen auftritt, die nicht mehr wasserlöslich sind. Vorzugsweise lassen sich derartige Oligomere bei Temperaturen im Bereich von 120 bis 160°C herstellen. Diese Oligomere weisen in der Regel 2 bis 120 Wiederholungseinheiten der allgemeinen Formel IIa und/oder IIb auf, 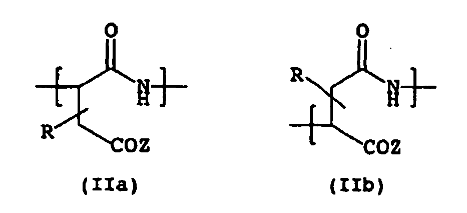 worin R die zuvor genannten Bedeutungen hat und insbesondere für Wasserstoff steht und Z ausgewählt ist unter OH, OH•NH₃ und NH₂. Derartige Oligomere weisen in der Regel einen zahlenmittleren Oligomerisationsgrad im Bereich von 2 bis 120 vorzugsweise 3 bis 100 auf, was einem zahlenmittleren Molekulargewicht im Bereich von 250 bis 15000, vorzugsweise 350 bis 11000 und einem Gewichtsmittleren Molekulargewicht im Bereich von 500 bis 100000, vorzugsweise 600 bis 20000 entspricht.

Sofern man als thermisch härtbares Bindemittel eine Mischung aus wenigstens einer Polycarbonsäure der allgemeinen Formel I (bzw. dem Anhydrid von I) und wenigstens einer beim Erwärmen Ammoniak freisetzenden Substanz verwendet, setzt man diese in der Regel in einem Mengenverhältnis ein, dass das Molverhältnis von freigesetztem Ammoniak zur Polycarbonsäure I wenigstens 0,9:1, und maximal 3:1, insbesondere 1:1 bis 2:1 beträgt.

Substanzen, welche beim Erwärmen Ammoniak abgeben, sind dem Fachmann ebenfalls bekannt, z.B. aus der WO 95/02007, auf deren Offenbarung Bezug genommen wird. Zu den Substanzen, welche beim Erwärmen Ammoniak abgeben, zählen Säurederivate des Ammoniaks, welche Ammoniak in salzartig oder kovalent gebundener Form enthalten, sowie mit Ammoniak beladene Absorptionsmittel. Säurederivate des Ammoniaks sind die Säureadditionssalze mit Mineralsäuren wie Ammoniumchlorid, Ammoniumsulfat, Diammoniumhydrogenphosphat, Säureadditonssalze mit schwachen Säuren wie Ammoniumacetat, Ammoniumformiat, Ammoniumoxalat und insbesondere die Ammoniak-Derivate der Kohlensäure wie Ammoniumhydrogencarbonsat, Ammoniumcarbonat und Ammoniumcarbaminat. Zu den Säurederivaten des Ammoniaks zählen weiterhin Kohlensäurederivate, die Ammoniak in kovalent gebundener Form enthalten wie Harnstoff, N-Alkylharnstoff, Alkylcarbamate, Alkali- und Erdalkalicarbamate, Ammoniumcarbamat, Cyansäure, Cyanursäure, Ammoniumcyanat, Biuret, Acetylharnstoff, Guanidin, Guanidiniumnitrat, Guanidiniumhydrogencarbonat, Semicarbazid, Cyanamid, Calciumcyanamid, Dicyandiamid, Biguanid, Nitroguanidin, Aminoguanidin, Allophanate, Melamin, Amidinharnstoff Cyanharnstoff und Thioharnstoff. Für die Beladung mit Ammoniak geeignete Absorbtionsmittel sind beispielsweise Aktivkohle, Aluminiumoxid, Kieselgel, saure Ionentauscher, die Chloride des Calciums, Kobalts, Zinks, Kieselgur, Kieselsäure, Wasserglas, Eisenhydroxid, Aluminiumhydroxid, Tonerde, Titandioxid, Eisenoxid, Zeolith und Bentonit. Als Verbindungen, die beim Erwärmen Ammoniak abgeben, sind auch Verbindungen wie Urotropin, Formamid und Acetamid geeignet. Bevorzugte Substanzen sind Ammoniumhydrogencarbonat, Ammoniumcarbonat, Ammoniumcarbaminat.

Mit Ammoniak beladene Absorptionsmittel werden durch Überleiten von Ammoniak über geeignete Absorptionsmitteln erhalten. Geignet sind beispielsweise Aktivkohle, Zeolith, Aluminiumhydroxid, Aluminiumoxid, Kieselgel, Kieselgur, Kieselsäure, Wasserglas-Gel, Ammoniumnitrat als Diverssche Flüssigkeit, sauere Ionentauscher, Chloride von Calcium, Zink, und Cobalt, weiterhin Eisenhydroxid, Eisenoxid, Tonerden und Titandioxid.

Die Zusammensetzungen der vorliegenden Erfindung können als Pulver oder als Lösung, vorzugsweise als wässrige Lösung eingesetzt werden. Die Formulierungsform richtet sich dabei in erster Linie nach dem Anwendungszweck. Beispielsweise werden zur Verfestigung von Fasergebilden die erfindungsgemässen Zusammensetzungen vorzugsweise als Lösungen, insbesondere als wässrige Lösungen, eingesetzt. Bei der Herstellung von Formkörpern aus feinteiligen Materialien können sowohl als Pulver als auch in Form von Lösungen eingesetzt werden.

Für Anwendung als Pulver sind als erfindungsgemässe Zusammensetzung insbesondere die Amide und die Halbamide von Polycarbonsäuren I, sowie Mischungen aus Polycarbonsäuren und Substanzen, welche Ammoniak freisetzen, geeignet. Für die Anwendung in Lösung, vorzugsweise in wässrigen Lösungen werden die Ammoniumsalze der Polycarbonsäuren I und ihrer Halbamide, sowie die wasserlöslichen Oligomere mit Wiederholungseinheiten der Formeln IIa und IIb, vorzugsweise deren Ammoniumsalze (Z = OH•NH₃) bevorzugt.

Bei der Herstellung der Umsetzungsprodukte von der Polycarbonsäure I mit Ammoniak kann auch ein primäres Amin, d.h. eine Verbindung mit wenigstens einer NH₂-Gruppe zugegen sein. Ebenso können die Erfindungsgemässen Zusammensetzungen ein primäres Amin enthalten. In der Regel wird jedoch der molare Anteil des primären Amins 30 Mol-%, bezogen auf die Polycarbonsäure I nicht überschreiten. Beispiele für primäre Amine sind Methylamin, Ethylamin, n-Propylamin, Isopropylamin, n-Butylamin, n-Hexylamin, Aminoethanol, Aminopropanol, Cyclohexylamin, Ethylendiamin, Diethylendiamin und vergleichbare. Bevorzugte Ausführungsformen der erfindungsgemässen Zusammensetzungen enthalten keine primären Amine oder deren Umsetzungsprodukte mit Polycarbonsäuren I.

Die erfindungsgemäss verwendeten Zusammensetzungen können neben den vorgenannten Umsetzungsprodukten von Polycarbonsäuren mit Ammoniak auch einem Amin oder Amid mit zwei oder mehreren Hydroxy-C₂-C₄-alkylgruppen und/oder deren Umsetzungsprodukte mit Polycarbonsäuren I enthalten.

Amine und Amide mit wenigstens zwei, z.B. 2, 3, 4, 5 oder 6 Hydroxy-C₂-C₄-alkylgruppen können in den erfindungsgemässen Zusammensetzungen üblicherweise in einer Menge bis 50 Gew.-% vorzugsweise bis 30 Gew.-%, z.B. 1 bis 50 Gew.-%, vorzugsweise 3 bis 30 Gew.-%, bezogen auf das Umsetzungsprodukt aus Ammoniak und Polycarbonsäure (bzw. auf die äquivalente Menge aus Carbonsäure und Ammoniak-freisetzender Substanz) enthalten sein.

Beispiele für Amine mit wenigstens 2 Hydroxy-C₂-C₄-alkylgruppen sind insbesondere Alkanolamine der allgemeinen Formel IV 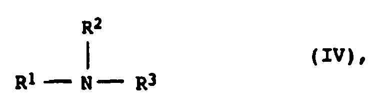 wobei R¹ für ein H-Atom, eine C₁-C₂₀-Alkylgruppe, eine C₂-C₄-Hydroxyalkylgruppe oder einen Rest der Formel V

-(CH₂CH₂O)ₓ(CH₂CH(CH₃)O)_{y}-H (V)

steht, wobei in der Formel V die Reihenfolge der Alkylenoxideinheiten beliebig ist und x und y unabhängig voneinander für eine ganze Zahl von 0 bis 100 stehen, wobei die Summe aus x und y > 1 ist und R² und R³ unabhängig voneinander für eine C₂-C₄-Hydroxyalkylgruppe stehen.

Besonders bevorzugt stehen R² und R³ unabhängig voneinander für eine 2-Hydroxyethyl-, eine 2- oder 3-Hydroxypropyl- oder eine 2-, 3- oder 4-Hydroxybutylgruppe, und R¹ für ein H-Atom, eine C₁-C₆-Alkylgruppe, insbesondere für Methyl, Ethyl n- und iso-Propyl, oder eine C₂-C₄-Hydroxyalkylgruppe.

Besonders bevorzugte Verbindungen IV sind Diethanolamin, Triethanolamin, Diisopropanolamin, Triisopropanolamin, Methyldiethanolamin, Butyldiethanolamin und Methyldiisopropanolamin, insbesondere Triethanolamin, und die Alkoxylate davon.

Weitere geeignete Amine mit wenigstens 2 Hydroxy-C₂-C₄-alkylgruppen sind die in der DE 196 21 573 als Komponente A offenbarten Amine, auf die hiermit Bezug genommen wird. Bei diesen Verbindungen handelt es sich um lineare oder verzweigte aliphatische Verbindungen, die pro Molekül mindestens zwei funktionelle Aminogruppen vom Typ (a) und/oder (b) aufweisen 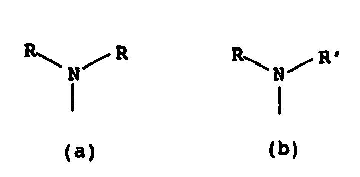 worin R für C₂-C₄-Hydroxyalkyl steht und R' für C₁-C₂₀-Alkyl steht. Bevorzugt handelt es sich um eine Verbindung der Formel VI 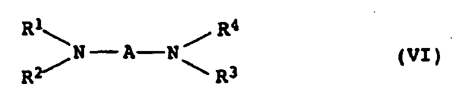 worin
- A: für C₂-C₁₈-Alkylen steht, das gegebenenfalls substituiert ist durch ein oder mehrere Gruppen, die unabhängig voneinander ausgewählt sind unter C₁-C₄-Alkyl, C₂-C₄-Hydroxyalkyl, C₃-C₇-Cycloalkyl, OH und NR⁶R⁷, wobei R⁶ und R⁷ unabhängig voneinander für H, C₂-C₄-Hydroxyalkyl oder C₁-C₄-Alkyl stehen, und das gegebenenfalls unterbrochen ist durch ein oder mehrere Sauerstoffatome und/oder NR⁵-Gruppen, wobei R⁵ für H, Hydroxyalkyl, (CH₂)ₙNR⁶R⁷, wobei n für 2 bis 5 steht und R⁶ und R⁷ die oben angegebenen Bedeutungen besitzen, oder Alkyl, das seinerseits durch ein oder mehrere NR⁵-Gruppen, wobei R⁵ die oben angegebenen Bedeutungen besitzt, unterbrochen und/oder durch ein oder mehrere NR⁶R⁷-Gruppen substituiert sein kann, wobei R⁶ und R⁷ die oben angegebenen Bedeutungen besitzen, steht;
oder A für einen Rest der Formel steht: 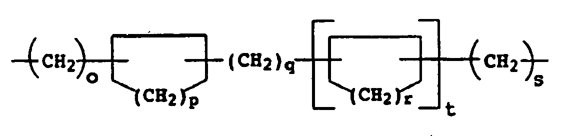 worin
- o, q und s: unabhängig voneinander für 0 oder eine ganze Zahl von 1 bis 6 stehen,
- p und r: unabhängig voneinander für 1 oder 2 stehen und
- t: für 0, 1 oder 2 steht,
wobei die cycloaliphatischen Reste auch durch 1, 2 oder 3 C₁-C₄-Alkylreste substituiert sein können und
R¹, R² und R³ und R⁴ unabhängig voneinander für H, C₂-C₄-Hydroxyalkyl, C₁-C₄-Alkyl oder C₃-C₇-Cycloalkyl stehen.

Zu den Aminen oder Amiden mit wenigstens 2 Hydroxy-C₂-C₄-alkylgruppen zählen auch die in der US-5 143 582 genannten β-Hydroxyalkylamide der Formel 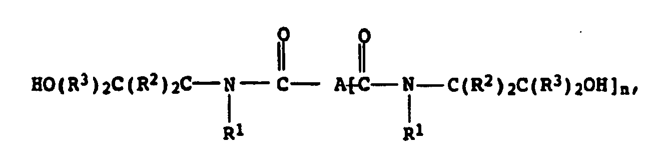 worin R¹ Wasserstoff, eine kurzkettige Alkylgruppe oder HO(R³)₂C(R²)₂C-, n für 1, 2, 3 oder 4, vorzugswese für 1 steht, -A- ein n+1-wertiger, vorzugsweise zweiwertiger organischer Rest, insbesondere eine -(CH₂)ₘ-Gruppe, worin m für eine ganze Zahl von 0 bis 8, vorzugsweise von 2 bis 8 steht, bedeutet, R² und R³ unabhängig voneinander Wasserstoff oder C₁-C₅-Alkyl bedeuten wobei vorzugsweise alle Gruppen R² und R³ für Wasserstoff stehen oder eine der R²/R³-Gruppen C₁-C₅-Alkyl bedeutet und die übrigen R²/R³-Gruppen Wasserstoff bedeuten. Besonders bevorzugt ist Bis[N,N-di(2-hydroxyethyl)]adipinsäureamid.

Außerdem können die erfindungsgemäßen Zusammensetzungen auch ein feinteiliges filmbildendes Polymerisat, beispielsweise in Form einer wässrigen Dispersion oder eines Polymerpulvers enthalten. Bei dem feinteiligen Polymerisat handelt es sich in der Regel um ein radikalisches Emulsionspolymerisat oder ein daraus hergestelltes Pulver.

Das feinteilige Polymerisat kann in den erfindungsgemässen Zusammensetzungen üblicherweise in einer Menge bis 500 Gew.-%, z.B. 5 bis 500 Gew.-%, bezogen auf das Umsetzungsprodukt aus Ammoniak und Polycarbonsäure bzw. Anhydrid (bzw. auf die äquivalente Menge aus Carbonsäure bzw. Anhydrid und Ammoniak-freisetzender Substanz) enthalten sein.

Im Allgemeinen ist das feinteilige Polymerisat aufgebaut aus
- 80 bis 100 Gew.-%, bevorzugt 85 bis 99,9 Gew.-%, bezogen auf das Gesamtgewicht der das Polymerisat bildenden Monomere, wenigstens eines ethylenisch ungesättigten Hauptmonomeren sowie
- 0 bis 20 Gew.-%, bevorzugt 0,1 bis 15 Gew.-%, bezogen auf das Gesamtgewicht der das Polymerisat bildenden Monomere, wenigstens eines ethylenisch ungesättigten Comonomeren.

Bei dem Hauptmonomer handelt es sich in der Regel um ein monoethylenisch ungesättigtes Monomer oder um konjugierte Diolefine mit begrenzter Wasserlöslichkeit, die in der Regel weniger als 80 g/l, vorzugsweise weniger als 50 g/l, z.B im Bereich von 0,1 bis 50 g/l (bezogen auf 25°C und 1 bar) beträgt.

Beispiele für Hauptmonomere sind:
- Ester aus vorzugsweise 3 bis 6 C-Atomen aufweisenden α,β-monoethylenisch ungesättigten Mono- oder Dicarbonsäure, z.B. Ester der Acrylsäure, Methacrylsäure, Maleinsäure, Fumarsäure und Itaconsäure mit C₁-C₁₂-, vorzugsweise C₁-C₈-Alkanolen. Beispiele für derartige Ester sind insbesondere Methyl-, Ethyl-, n-Butyl-, Isobutyl-, tert-Butyl-, n-Pentyl-, iso-Pentyl- und 2-Ethylhexylacrylat und die entsprechenden Methacrylate;
- vinylaromatische Verbindungen wie Styrol, α-Methylstyrol, o-Chlorstyrol, Vinyltoluolen und Mischungen davon;
- Vinylester von C₁-C₁₈-Mono- oder Dicarbonsäuren, wie Vinylacetat, Vinylpropionat, Vinyl-n-butyrat, Vinyllaurat und/oder Vinylstearat;
- konjugierte Diene wie Butadien;
- lineare oder verzweigtkettige 1-Olefine oder cyclischen Olefinen, z. B. Ethen, Propen, Buten, Isobuten, Penten, Cyclopenten, Hexen oder Cyclohexen;
- Acrylnitril, Methacrylnitril: Der Anteil an den Hauptmonomeren wird aufgrund der erhöhten Wasserlöslichkeit der Nitrile in der Regel 30 Gew.-%, bezogen auf die Gesamtmonomermenge nicht überschreiten. Sofern erwünscht machen die Nitrile in der Regel 1 bis 30, vorzugsweise 2 bis 25 und insbesondere 5 bis 20 Gew.-% der Gesamtmonomermenge aus.
- Vinyl- und Allylalkylether mit 1 bis 20, vorzugsweise 2 bis 10 Kohlenstoffatomen im Alkylrest, wobei der Alkylrest noch weitere Substituenten, wie eine oder mehrere Hydroxylgruppen, eine oder mehrere Amino- oder Diaminogruppen oder eine bzw. mehrere Alkoxylatgruppen tragen kann, wie z. B. Methylvinylether, Ethylvinylether, Propylvinylether und 2-Ethylhexylvinylether, Isobutylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.

Besonders bevorzugte Hauptmonomere sind vinylaromatische Monomere, insbesondere Styrol, sowie Ester der Acrylsäure und Ester der Methacrylsäure mit C₁-C₈-Alkanolen, insbesondere Methylmethacrylat, n-Butylmethacrylat, n-Butylacrylat, tert.-Butylacrylat, Ethylacrylat, 2-Ethylhexylacrylat, weiterhin Vinylacetat, Vinylpropionat, Ethen und Butadien.

Beispiele für geeignete Comonomere sind:
- monoethylenisch ungesättigten C₃-C₈-Mono- oder Dicarbonsäuren oder deren Anhydride, vorzugsweise Acrylsäure, Methacrylsäure, Methacrylsäureanhydrid, Maleinsäure, Maleinsäureanhydrid, Fumarsäure und/oder Itaconsäure;
- Amide und N-Alkylamide der vorgenannten ethylenisch ungesättigten Carbonsäuren, wie Acrylamid, Methacrylamid, N,N-Dimethylacrylamid, N-tert.-Butylacrylamid, N-Methylmethacrylamid, N-Alkylolamide, insbesondere N-Hydroxymethyl- und N-Hydroxyethylamide monoethylenisch ungesättigter Monocarbonsäuren wie N-Methylolacrylamid und -methacrylamid.
- sulfogruppenhaltige Monomere, wie z. B. Allylsulfonsäure, Methallylsulfonsäure, Styrolsulfonsäure, Vinylsulfonsäure, 2-Acrylamido-2-methylpropansulfonsäure, Allyloxybenzolsulfonsäure, deren entsprechenden Alkali- oder Ammoniumsalzen bzw. deren Mischungen sowie Sulfopropylacrylat und/oder Sulfopropylmethacrylat;
- C₁-C₄-Hydroxyalkylester von C₃-C₈-Mono- oder Dicarbonsäuren, insbesondere der Acrylsäure, Methacrylsäure oder Maleinsäure, oder deren mit 2 bis 50 Mol Ethylenoxid, Propylenoxid, Butylenoxid oder Mischungen davon alkoxylierten Derivate oder Ester von mit 2 bis 50 Mol Ethylenoxid, Propylenoxid, Butylenoxid oder Mischungen davon alkoxylierten C₁-C₁₈-Alkoholen mit den erwähnten Säuren, wie Hydroxyethylacrylat, Hydroxyethylmethacrylat, Hydroxypropylacrylat, Hydroxypropylmethacrylat, Butandiol-1,4-monoacrylat, Ethyldiglykolacrylat, Methylpolyglykolacrylat (11 EO), (Meth)acrylsäureester von mit 3, 5, 7, 10 oder 30 Mol Ethylenoxid umgesetztem C₁₃/C₁₅-Oxoalkohol bzw. deren Mischungen;
- ethylenisch ungesättigte Phosphor- und Phosphonsäuren z.B. Vinylphosphonsäure und deren Salze, Vinylphosphonsäuredimethylester, Acryloxyethylphosphat, Acryloxyethylphosphonat, 2-Acrylamido-2-methylphosphonat und vergleichbare;
- Alkylaminoalkyl(meth)acrylate oder Alkylaminoalkyl(meth)acrylamide oder deren Quarternisierungsprodukte, wie z. B. 2-(N,N-Dimethylamino)-ethyl(meth)acrylat oder 2-(N,N,N-Trimethylammonium)-ethylmethacrylat-chlorid, 3-(N,N-Dimethylamino)-propyl(meth)acrylat, 2-Dimethylamino-ethyl(meth)acrylamid, 3-Dimethylaminopropyl(meth)acrylamid, 3-Trimethylammoniumpropyl(meth)acrylamid-chlorid und Mischungen davon;
- Allylester von C₁-C₃₀-Monocarbonsäuren;
- N-Vinylverbindungen, wie N-Vinylformamid, N-Vinyl-N-methylformamid, N-Vinylpyrrolidon, N-Vinylimidazol, 1-Vinyl-2-methyl-imidazol, 1-Vinyl-2-methylimidazolin, 2-Vinylpyridin, 4-Vinylpyridin, N-Vinylcarbazol und/oder N-Vinylcaprolactam;
- Diallyldimethylammoniumchlorid, Vinylidenchlorid, Vinylchlorid, Acrolein, Methacrolein;
- Ketogruppen enthaltende Monomere, wie Acetoacetoxyethyl(meth)acrylat oder Diacetonacrylamid, harnstoffgruppenhaltigen Monomere, wie Ureidoethyl(meth)acrylat, (N-(2-Methacryloxyethyl)imidazolin-2-on);
- Silylgruppen enthaltende Monomere, wie Trimethoxysilylpropylmethacrylat;
- Glycidylgruppen enthaltende Monomere, wie Glycidylmethacrylat;
- mehrfach ethylenisch ungesättigte Monomere wie Allylacrylat, Butandioldiacrylat, Hexandioldiacrylat, Diethylenglykoldiacrylat, Triethylenglykoldiacrylat, Triethylolpropantriacrylat, die entsprechenden Di- und Trimethacrylate, weiterhin Divinylbenzol, Diallylphthalat, Butandioldiallylether, Hexandioldiallylether und dergleichen. Der Anteil mehrfach ethylenisch ungesättigter Monomere beträgt in der Regel nicht mehr als 5 Gew.-%, insbesondere z. B. 0,1 bis 5 Gew.-%, bezogen auf die das Polymerisat bildenden Monomere. In einer bevorzugten Ausführungsform enthält das feinteilige Polymerisat nicht mehr als 0,1 Gew.-% und vorzugsweise keine (d. h. weniger als 0,01 Gew.-%) mehrfach ethylenisch ungesättigte Monomere einpolymerisiert.

Vorzugsweise umfassen die Comonomere wenigstens eine der vorgenannten monoethylenisch ungesättigten Carbonsäuren, insbesondere eine der Monocarbonsäuren, die vorzugsweise in einer Menge bis 10 Gew.-%, z.B. 0,1 bis 10 Gew.-% einpolymerisiert sind. Bevorzugte Comonomere sind weiterhin die Amide monoethylenisch ungesättigter Monocarbonsäuren, z.B. Acrylamid oder Methacrylamid. Diese machen in der Regel, sofern erwünscht, bis zu 10 Gew.-%, z.B. 0,1 bis 10 Gew.-%, insbesondere 0,1 bis 5 Gew.-% der Gesamtmonomermenge aus.

Unter feinteiligen Polymerisaten versteht man teilchenförmige Polymerisate, deren Polymerteilchen einen gewichtsmittleren Teilchendurchmesser < 100 µm aufweisen. Sofern die Polymerisate als wässrige Dispersion eingesetzt werden wird der gewichtsmittlere Polymerteilchendurchmesser d₅₀ einen Wert von 5 µm und insbesondere 2 µm nicht überschreiten. Insbesondere liegt der gewichtsmittlere Teilchendurchmesser d₅₀ der Polymerisatteilchen im Bereich von 100 bis 2000 nm. Unter dem gewichtsmittleren Teilchendurchmesser d₅₀ versteht man den Teilchendurchmesser, der von 50 Gew.-% der Polymerisatteilchen unterschritten wird. Der gewichtsmittlere Teilchendurchmesser eines Polymerisats lässt sich in bekannter Weise an einer wässrigen Dipsersion der Teilchen durch Quasielastische Lichtstreung oder durch Messung in einer Ultrazentrifuge bestimmen. Die Pulverteilchen der aus den Dispersionen hergestellten Pulver weisen naturgemäss grössere Teilchendurchmesser auf, da die Pulverteilchen in der Regel aus einer Vielzahl agglomerierter Primärteilchen bestehen. Typische Pulverdurchmessser liegen in der Regel im Bereich von 2 bis 100 µm.

Die Monomerzusammensetzung wird im Allgemeinen so gewählt, dass für das Polymerisat A1 eine Glasübergangstemperatur T_{g} im Bereich von -60 °C bis +150 °C resultiert.

Die Herstellung der feinteiligen Polymerisate erfolgt in der Regel durch radikalische Emulsionspolymerisation in Gegenwart der hierführ üblichen grenzflächenaktiven Verbindungen nach bekannten Verfahren (siehe z.B. D. Distler, Wässrige Polymerdispersionen, Wiley VCH, Weinheim 1999; H. Warson, Synthetic Resin Emulsions, Ernest Benn Ltd., London 1972, S. 193-242). Hie herstellung der Polymerpulver aus diesen Dispersionen ist dem Fachmann ebenfalls geläufig und erfolgt in der Regel durch Sprühtrocknung der wässrigen Polymerdispersionen, vorzugsweise in Gegenwart hierfür üblicher Sprühhilfsmittel wie Polyvinylalkohol, Polyacrylsäuren, Phenolsulfonsäure- und Naphthalinsulfonsäure-Formaldehyd-Kondensationsprodukten. Sowohl wässrige Polymerdispersionen als auch die daraus hergestellten Pulver sind überdies kommerziell erhältlich, z.B. unter den ACRONAL®- STYRONAL®-, BUTOFAN®-und STYROFAN®-Marken der BASF-Aktiengesellschaft, Ludwigshafen, Deutschland.

Als grenzflächenaktive Substanzen kommen die Üblicherweise für die Emulsionspolymerisation eingesetzten Emulgatoren und Schutzkolloide in Betracht. Bevorzugte Emulgatoren sind anionische und nichtionische Emulgatoren, die im Unterschied zu den Schutzkolloiden in der Regel ein Molekulargewicht unterhalb 2000 g/mol aufweisen und in Mengen von bis zu 0,2 bis 10 Gew.-%, vorzugsweise 0,5 bis 5 Gew.-%, bezogen auf das Polymerisat in der Dispersion bzw. auf die zu polymerisierenden Monomere M eingesetzt werden.

Zu den anionischen Emulgatoren zählen Alkali- und Ammoniumsalze von Alkylsulfaten (Alkylrest: C₈-C₂₀), von Schwefelsäurehalbestern ethoxylierter Alkanole (EO-Grad: 2 bis 50, Alkylrest: C₈ bis C₂₀) und ethoxylierter Alkylphenole (EO-Grad: 3 bis 50, Alkylrest: C₄-C₂₀), von Alkylsulfonsäuren (Alkylrest: C₈ bis C₂₀) und von Alkylarylsulfonsäuren (Alkylrest: C₄-C₂₀). Weitere geeignete anionische Emulgatoren finden sich in Houben-Weyl, Methoden der organischen Chemie, Band XIV/1, Makromolekulare Stoffe, Georg-Thieme-Verlag, Stuttgart, 1961, S. 192-208.

Zu den anionischen grenzflächenaktiven Substanzen zählen auch Verbindungen der allgemeinen Formel I, 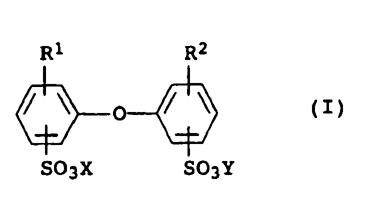 worin R¹ und R² Wasserstoff oder lineare oder verzweigte Alkylreste mit 6 bis 18 C-Atomen und insbesondere mit 6, 12 und 16 C-Atomen bedeuten, wobei R¹ und R² nicht beide gleichzeitig Wasserstoff sind. X und Y sind bevorzugt Natrium, Kalium oder Ammonium, wobei Natrium besonders bevorzugt ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen I sind allgemein bekannt, z. B. aus der US-A-4,269,749.

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₉), Ethoxylate langkettiger Alkohole (EO-Grad: 3 bis 50, Alkylrest: C₈-C₃₆), sowie Polyethylenoxid/Polypropylenoxid-Blockcopolymere. Bevorzugt werden Ethoxylate langkettiger Alkanole (Alkylrest: C₁₀-C₂₂, mittlerer Ethoxylierungsgrad: 3 bis 50) und darunter besonders bevorzugt solche auf Basis von Oxoalkoholen und nativen Alkoholen mit einem linearen oder verzweigten C₁₂-C₁₈-Alkylrest und einem Ethoxilierungsgrad von 8 bis 50.

Bevorzugt werden anionische Emulgatoren, insbesondere Emulgatoren der allgemeinen Formel I, oder Kombinationen aus wenigstens einem anionischen und einem nichtionischen Emulgator eingesetzt.

Geeignete Schutzkolloide sind beispielsweise Polyvinylalkohole, Stärke- und Cellulosederivate, Carboxylgruppen enthaltende Polymere wie Homo- und Copolymere der Acrylsäure und/oder der Methacrylsäure mit Comonomeren wie Styrol, Olefinen oder Hydroxyalkylestern, oder Vinylpyrrolidon enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/ oder Schutzkolloiden können verwendet werden.

Diese grenzflächenaktiven Verbindungen verbleiben herstellungsbedingt in den üblichen Einsatzformen der feinteiligen Polymerisate und sind somit auch in den erfindungsgemäss angewendeten Zusammensetzungen enthalten, wenn diese ein feinteiliges Polymerisat enthalten.

Weiterhin können die erfindungsgemässen Zusammensetzungen als zusätzlichen Bestandteil eine polmyere Polycarbonsäure, vorzugsweise ein Homo- oder Copolymer der Acrylsäure und/oder der Methacrylsäure enthalten.

Bei den polymeren Polycarbonsäuren handelt es sich in der Regel um Polymere, die aus ethylenisch ungesättigten Mono- oder Dicarbonsäuren mit vorzugsweise 3 bis 8 C-Atomen und gegebenenfalls davon verschiedenen Comonomeren aufgebaut sind. In diesen Polycarbonsäuren bilden die ethylenisch ungesättigten Carbonsäuren den Hauptbestandteil, d.h. sie machen mehr als 40 Gew.-%, vorzugsweise mehr als 50 Gew.-% und insbesondere mehr als 60 Gew.-% der Monomere aus, aus denen die polymere Polycarbonsäure aufgebaut ist.

Bevorzugte ethylenisch ungesättigte Mono- oder Dicarbonsäuren sind Acrylsäure, Methacrylsäure, Maleinsäure und Fumarsäure und besonders bevorzugt Acrylsäure und Methacrylsäure sowie deren Mischungen untereinander und deren Mischungen mit Maleinsäure.

Als Comonomere kommen die zuvor bei den feinteiligen Monomeren als Hauptmonomere aufgeführten Monomere sowie die Amide und die C₁-C₄-Hydroxyalkylester der vorgenannten ethylenisch ungesättigten Mono- und Dicarbonsäuren, ethylenisch ungesättigte Phosphor- oder Phosphonsäuren, N-Vinylamide und ethylenisch ungesättigte Sulfonsäuren (sulfogruppen tragenden Monomere) in Betracht.

Ganz besonders bevorzugt sind Copolymere der Acrylsäure mit Maleinsäure, wie sie in der EP-A 75820 beschrieben sind, sowie Homopolymere der Acrylsäure.

Häufig weisen die polymeren Polycarbonsäuren ein zahlenmittleres Molekulargewicht im Bereich von 1000 bis 1 Mio. auf. Der K-Wert dieser Polycarbonsäuren (nach Fikentscher) liegt in der Regel im Bereich von 10 bis 150 (gemessen als 1 gew.-%ige Lösung in Wasser).

Die polymeren Polycarbonsäuren und ihre Herstellung sind aus dem Stand der Technik bekannt, beispielsweise aus der DE-A 196 21 573, EP-A 75 820 und DE-A 36 20 149.

Sofern erwünscht, kann man die polymeren Polycarbonsäuren in den erfindungsgemässen Zusammensetzungen in einer Menge von 5 bis 500 Gew.-%, bezogen auf das Umsetzungsprodukt aus Polycarbonsäure I mit Ammoniak, einsetzen.

Bevorzugt werden die polymeren Polycarbonsäuren zusammen einer wenigstens zwei Hydroxy-C₂-C₄-alkylgruppen aufweisendes Amin oder Amid, z.B. mit den Hydroxylgruppen tragenden Aminoverbindungen der Formel IV und/oder mit den Aminen der Formel VI, eingesetzt. Das Gewichtsverhältnis von polymerer Polycarbonsäure zu Hydroxylgruppen aufweisender Verbindung liegt dann vorzugsweise im Bereich von 100:1 bis 1:1 und insbesondere im Bereich von 50:1 bis 2:1.

Ferner können die erfindungsgemäßen Zusammensetzungen die in der Beschichtungs- und Imprägnierungstechnologie üblichen Hilfsstoffe, farbgebenden Bestandteile und feinteilige, inerte Füllstoffe enthalten. Beispiele für feinteilige inerte Füllstoffe sind Aluminiumsilikate, Quarz, gefällte oder pyrogene Kieselsäure, Leicht- und Schwerspat, Talkum, Dolomit oder Calciumcarbonat; farbgebende Bestandteile sind insbesondere Pigmente wie Titanweiß, Zinkweiß, Eisenoxidschwarz etc. Beispiele für Hilfststoffe sind oberflächenaktive Substanzen zur Verbesserung der Benetzungbarkeit, Haftvermittler sowie Konservierungsmittel.

Die erfindungsgemässe Verwendung der oben definierten Zusammensetzungen ermöglichen die Herstellung von Formkörpern und verfestigten Flächengebilden mit ausgezeichneten mechanischen Eigenschaften bei vergleichsweise kurzen Härtungszeiten. Die erfindungsgemässe Verwendung der oben definierten Zusammensetzungen erlaubt insbesondere die Herstellung von Formkörpern mit einer hohen mechanischen Festigkeit, die auch unter Feuchtklima-Bedingungen Dimensionsstabilität aufweisen. Weiterhin eignen sich die erfindungsgemässen Zusammensetzungen als Leim- bzw. Tränkharze für Papiere, insbesondere Dekorpapiere, sowie als Klebstoff zur Herstellung von Furnieren und Laminaten.

Die unter Verwendung der erfindungsgemäss verwendeten Zusammensetzungen hergestellten Formkörper und Flächengebilde sind formaldehydfrei. Formaldehydfrei bedeutet, dass die erfindungsgemäßen Formkörper und Flächengebilde aufgrund des verwendeten Bindemittels keine wesentlichen Mengen an gebundenem oder freiem Formaldehyd enthalten, außer den im zu bindenden Substrat möglicherweise enthaltenen natürlichen Formaldehydquellen. Bei der Herstellung der erfindungsgemäßen Formkörper und Flächengebilde werden daher keine wesentlichen Mengen an Formaldehyd freigesetzt, die über die durch das Substrat bedingten Mengen hinausgehen. Im Allgemeinen enthalten die Formkörper und Flächengebilde weniger als 100 ppm Formaldehyd und geben auch kein aus dem Bindemittel resultierendes Formaldehyd an die Umgebung ab.

Überdies können die durch die erfindungsgemässe Verwendung der oben definierten Zusammensetzungen hergestellten Formkörper und Flächegebilde in einfacher Weise entsorgt oder recycliert werden. Hierzu behandelt man den Formkörper mit wässrigem Alkali, beispielsweise mit wässrigen Lösungen von Alkalihydroxiden, insbesondere Natrium- oder Kaliumhydroxid, oder Alkalicarbonaten. Die Alkalilösungen enthalten beispielsweise 5 bis 50 Gew.-%, insbesondere 10 bis 30 Gew.-% Alkali. In der Regel reicht ein Besprühen oder Tränken des Formkörpers mit dem wässrigen Alkali, vorzugsweise bei erhöhter Temperatur aus, z.B. bei Temperaturen im Bereich von 30 bis 100°C. Die so erhaltenen Laugen können einer biologischen Klärung zugeführt werden, denn die in ihnen enthaltenen organischen Bestandteile sind zu wenigstens 60 % biologisch abbaubar.

Zur Herstellung von Formkörpern durch erfindungsgemässe Verwendung der oben definierten Zusammensetzung wird ein feinteiliges Material, im Folgenden Substrat, mit einer oben definierten Zusammensetzung imprägniert oder vermischt und die so erhaltene Mischung bei Temperaturen oberhalb 120°C einem Formgebungsverfahren unterworfen.

Unter feinteiligen Substraten versteht man insbesondere faserige oder körnige Substratmaterialien, wobei die körnigen Materialien typischerweise durchschnittliche Abmessungen im Bereich von 0,01 bis 2 cm aufweisen und die faserartigen Materialien typischerweise durchschnittliche Faserlängen von 0,1 bis 10 cm aufweisen. Beispiele für körnige Substratmaterialien sind natürliche organische Materialien wie Holzschnitzel und -späne sowie Korkschnitzel und anorganische Materialien wie Sand. Beispiele für faserartige Materialien sind Naturfasern wie Holzfasern, Jutefasern, Flachsfasern, Hanffasern, Kokosfasern, Baumwollfasern, Cellulosefasern, Wolle, Brennessel- oder Sisalfasern, sowie künstliche Fasermaterialien wie Kunstfasern auf der Basis von faserbildenden organischen Polymeren, Glasfasern und Mineralfasern.

Die Durchführung des Formgebungsverfahrens bei Temperaturen oberhalb 120°C führt zu einer Verfestigung der Mischung aus der erfindungsgemässen Zusammensetzung und dem feinteiligen Material zu einem Formkörper. Man nimmt an, dass die Verfestigung durch die Umwandlung der eingesetzten Zusammensetzung in die oben beschriebenen wasserunlöslichen Polymere mit cyclischen Imidstrukturen, z.B. Struktureinheiten der allgemeinen Formel III, bewirkt wird, wobei eine zusätzliche Verfestigung durch die gegbenenfalls eingesetzten Amine oder Amide mit wenigstens zwei Hydroxy-C₂-C₄-alkylgruppen bewirkt wird. Diese ist vermutlich auf Vernetzungsreaktionen zwischen den gebildeten Polymeren zurückzuführen. Die gegebenenfalls eingesetzten feinteiligen Polymerisate bewirken vermutlich eine Flexiblisierung und zusätzliche Hydrophobierung der nach dem erfindungsgemässen Verfahren erhältlichen Formkörper.

Die erfindungsgemäss zur Anwendung kommenden Zusammensetzungen liegen vor der Anwendung als monomolekulare Verbindungen oder als niedermolekulare Oligomere vor. Sie bilden daher beim Erwärmen dünnflüssige Schmelzen bzw. niedrig viskose Lösungen, die zu einer besonders gute Verteilung des Bindemittels in den zu verfestigenden feinteiligen Substraten führt.

Die zur Herstellung des Formkörpers erforderlichen Temperaturen betragen vorzugsweise wenigstens 130°C, insbesondere wenigstens 140°C, besonders bevorzugt oberhalb 150°C, und ganz besonders bevorzugt oberhalb 160°C, und werden in der Regel 350°C nicht überschreiten. Vorzugsweise liegen sie im Bereich von 130°C bis 300°C, insbesondere 140°C bis 280°C, besonders bevorzugt 140°C bis 250°C und ganz besonders bevorzugt 160°C bis 230°C. Die jeweilige Temperatur richtet sich auch nach dem gewählten Substrat, wobei das Ausmass der Härtung auch über die Härtungsdauer gesteuert werden kann, die je nach Temperatur im Bereich weniger Minuten, z.B. 1 min, bis mehrere Stunden, z.B. bis 3 h betragen kann.

Die Verfestigung des feinteiligen Substrats kann sowohl in einer als auch in zwei oder mehr Stufen erfolgen. So kann z. B. in einem ersten Schritt die Härtungstemperatur und -zeit so gewählt werden, dass zunächst nur eine gleichmässige Verteilung der schmelzflüssigen Bestandteile der Zusammensetzung in dem feinteiligen Substrat erreicht wird, und anschliessend durch Temperaturerhöhung eine weitgehend vollständige Verfestigung in einem zweiten oder weiteren Schritt erfolgt. Dieser weitere Schritt kann räumlich und zeitlich getrennt vom ersten Schritt erfolgen. Dadurch wird beispielsweise die Verwendung der erfindungsgemäßen Zusammensetzungen zur Herstellung von mit Bindemittel imprägnierten Halbzeugen möglich, die an anderer Stelle geformt und verfestigt werden können.

Das Formgebungsverfahren richtet sich naturgemäss nach der Art und der Geometrie des herzustellenden Formkörpers. Die Formgebung erfolgt in der Regel durch Anwendung von erhöhtem Druck, z.B. von im Allgemeinen 2 bis 1 000 bar, vorzugsweise 10 bis 750 bar, besonders bevorzugt 200 bis 500 bar.

Zur Herstellung der Formkörper wird man die oben definierten Zusammensetzung im Allgemeinen in einer Menge von 1 bis 100 Gew.-%, insbesondere 2 bis 50 Gew.-%, besonders bevorzugt 5 bis 40 Gew.-%, bezogen auf das feinteilige Substrat verwenden.

Das Vermischen bwz. Imprägnieren des feinteiligen Substrats mit den erfindungsgemäss zur Anwendung kommenden Zusammensetzungen kann in üblicher Weise durchgeführt werden. Pulverförmige Zusammensetzungen können beispielswese auf das, gegebenenfalls mechanisch vorverfestigte, Substratmaterial aufgestreut, eingestreut, eingerüttelt oder direkt mit dem Fasermaterial vermischt werden. Z.B. kann man das Substratmaterial flächenhaft ausbreiten und gegebenenfalls verdichten. Vor dem Aufstreuen der pulverförmigen Zusammensetzung kann das Substrat auch mit Wasser angefeuchtet werden. Das feinteilige Substrat kann auch mit einer fliessfähigen Form der oben definierten Zusammensetzung, z.B. einer wässrigen Lösung, beschichtet werden oder mit dem pulverförmigen Bindemittel vermischt werden.

Die Mischung aus Fasern, Schnitzeln und/oder Spänen und der oben definierten Zusammensetzung kann z. B. bei Temperaturen von 30 bis 120 °C vorgetrocknet werden und anschließend zu den Formkörpern bei den obengenannten Temperaturen verpresst werden.

Das erfindungsgemässe Verfahren eignet sich vorzugsweise zur Herstellung von Platten und konturierten Formteilen. Ihre Dicke beträgt im Allgemeinen mindestens 1 mm, vorzugsweise mindestens 2 mm. In Betracht kommen insbesondere Holzfaser- und Spanplatten, Korkplatten, -blöcke und -formen, Dämmstoffplatten und -rollen, z. B. aus Natur-, Mineral- und Glasfasern, für Automobilinnenteile, z. B. Türinnenverkleidungen, Armaturenträger, Hutablagen und vergleichbare.

Das erfindungsgemässe Verfahren eignet sich insbesondere zur Herstellung von Holzwerkstoffen wie Holzspanplatten und Holzfaserplatten. Die Herstellung von derartigen Formkörpern durch Verleimung von zerteiltem Holz ist vom Prinzip her bekannt (vgl. Ullmanns Encyclopädie der technischen Chemie, 4. Auflage 1976, Band 12, S. 709-727 sowie H.J. Deppe, K. Ernst Taschenbuch der Spanplattentechnik, 2. Auflage, Verlag Leinfelden 1982).

Es werden bevorzugt Späne eingesetzt, deren mittlere Spangröße zwischen 0,1 und 4 mm, insbesondere 0,2 und 2 mm liegt, und die weniger als 6 Gew.-% Wasser enthalten. Es können jedoch auch deutlich grobteiligere Späne und solche mit höherem Feuchtigkeitsgehalt eingesetzt werden. Das Bindemittel wird möglichst gleichmäßig auf die Holzspäne aufgetragen, wobei das Gewichtsverhältnis Bindemittel:Holzspäne vorzugsweise 0,02:1 bis 0,4:1 beträgt. Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 180 bis 230 °C durch Anwendung von Drücken von üblicherweise 10 bis 750 bar zu einer Platte verpresst. Die benötigten Presszeiten können in einem weiten Bereich variieren und liegen im Allgemeinen zwischen 15 Sekunden bis 30 Minuten.

Die zur Herstellung von mitteldichten Holzfaserplatten (MDF) benötigten Holzfasern geeigneter Qualität können aus rindenfreien Holzschnitzeln durch Zermahlung in Spezialmühlen oder sogenannten Refinern bei Temperaturen von ca. 180 °C hergestellt werden.

Zur Beleimung werden die Holzfasern im Allgemeinen mit einem Luftstrom aufgewirbelt und die thermisch härtbare Zusammenseztung in den so erzeugten Fasernstrom eingedüst ("Blow-Line" Verfahren). Das Verhältnis Holzfasern zu Bindemittel, bezogen auf den Trockengehalt bzw. Feststoffgehalt der Zusammensetzung beträgt üblicherweise 40:1 bis 2:1, bevorzugt 20:1 bis 4:1. Die beleimten Fasern werden in dem Fasernstrom bei erhöhten Temperaturen getrocknet, zu einem Faservlies ausgestreut und bei Drücken von 10 bis 750 bar zu Platten oder Formkörpern verpresst.

Die beleimten Holzfasern können auch wie in der DE-OS 2417243 beschrieben, zu einer transportablen Fasermatte verarbeitet werden. Dieses Halbzeug kann dann in einem zweiten, zeitlich und räumlich getrennten Schritt zu Platten oder Formteilen, wie z. B. Türinnenverkleidungen von Kraftfahrzeugen weiterverarbeitet werden.

In ähnlicher Weise können auch Formteile aus Kork hergestellt werden. Als feinteiliges Korksubstrat kommen sowohl gemahlener Kork mit Teilchengrößen < 2 mm als auch grobteiliger Kork mit Teilchengrößen im Bereich von 1 bis 20 mm, vorzugsweise 1 bis 10 mm, in Betracht. Hinsichtlich den Mengen an Bindemitteln und den Verarbeitungstemperaturen gilt das oben Gesagte.

Selbstverständlich können auch andere Naturfaserstoffe, wie Sisal, Jute, Hanf, Flachs, Kokosfasern und/oder Bananenfasern mit den erfindungsgemässen Bindemitteln zu Platten und Formteile verarbeitet werden. Die Naturfaserstoffe können auch in Mischungen mit Kunststofffasern, z. B. Polypropylen, Polyethylen, Polyester, Polyamide oder Polyacrylnitril verwendet werden. Diese Kunststoffasern können dabei auch als Co-Bindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern.

Die oben definierten Zusammensetzungen sind weiterhin geeignet als formaldehydfreie Bindemittel für mineralische Substrate wie Sand. Formkörper aus mineralischen Substraten, insbesondere Sand, finden beispielsweise als Gussformen und Gusskerne für den Metallguss sowie als Kokillendämmplatten Verwendung (E. Flemming, W. Tilch, Formstoffe und Formverfahren, Dt. Verlag für Grundstoffindustrie, Stuttgart, 1993).

Die Herstellung der Formkörper aus mineralischen Substraten erfolgt in der oben beschriebenen Weise durch Vermischen des Substrats mit den oben definierten Zusammensetzungen in den hierfür üblichen Apparaturen und anschliessendes Aushärten bei den oben angegebenen Temperaturen, vorzugsweise im Bereich von 160 bis 230°C. Die Zusammensetzung (gerechnet als Umsetzungsprodukt aus Polycarbonsäure I mit Ammoniak) wird vorzugsweise in einer Menge von 2 bis 50 Gew.-%, bezogen auf das mineralische Substrat eingesetzt. Bevorzugt werden zu diesem Zweck Zusammensetzungen, die wenigstens eine der oben genannten Amine oder Amide mit wenigstens zwei Hydroxy-C₂-C₄-alkylgruppen enthalten, vorzugsweise in einer Menge von 20 bis 50 Gew.-Teilen (GT), bezogen auf 100 gew.-Teile Umsetzungsprodukt.

Die erfindungsgemäßen Zusammensetzungen können auch zum Verfestigen von Flächengebilden aus Fasermaterialien verwendet werden. Die erfindungsgemässen Zusammensetzungen wirken dabei im ausgehärteten Zustand, d.h. nach dem Erwärmen auf die obengeannten Temperaturen als Bindemittel für die Fasern. Bevorzugt sind Glasfaservliese. Die ungebundenen Faservliese (Rohfaservliese), insbesondere aus Glasfasern, werden durch die ausgehärteten erfindungsgemäßen Zusammensetzungen gebunden, d. h. verfestigt.

Beispiele für Flächengebilde aus Fasermaterialien sind neben Geweben insbesondere Faservliese und Fasermatten. Als Faservliese seien Vliese aus den vorgenannten Fasermaterialien, insbesondere Vliese aus Cellulose, Celluloseacetat, Estern und Ethern der Cellulose, Baumwolle, Hanf, tierische Fasern, wie Wolle oder Haare und insbesondere Vliese von synthetischen oder anorganischen Fasern, z. B. Aramid-, Kohlenstoff-, Polyacrylnitril-, Polyester-, Mineral-, PVC- oder Glasfasern genannt.

Im Falle der Verwendung als Bindemittel für Faservliese können die erfindungsgemäßen Zusammensetzungen z. B. folgende Zusatzstoffe enthalten: Silikate, Silikone, borhaltige Verbindungen, Gleitmittel, Benetzungsmittel.

Zur Verfestigung der Fasergebilde wird die erfindungsgemäss verwendete Zusammensetzung vorzugsweise im Gewichtsverhältnis Faser/Bindemittel von 10:1 bis 1:1, besonders bevorzugt von 6:1 bis 3:1 auf das Rohfaservlies in der hierfür üblichen Weise, z. B. tränken, pflatschen, streichen bedrucken, oder im Falle der Pulver durch Einblasen mit dem Fasermaterial aufgebracht.

Nach dem Einarbeiten der Zusammensetzung in das Rohfaservlies erfolgt im Allgemeinen eine Verfestigung der Bindemittelzusammensetzung vorzugsweise bei 120 bis 350 °C, insbesondere 130 bis 280 °C, ganz besonders bevorzugt 140 bis 230 °C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Die erfindungsgemäßen Bindemittel erlauben insbesondere kurze Trocknungszeiten und auch niedrige Trocknungstemperaturen. Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z. B. aus PVC.

Beispiele für Flächengebilde aus Fasermaterialien sind ausserdem die üblicherweise als Dämmstoffe verwendeten Fasermatten, die je nach Verwendung aus anorganischen Fasern, wie Mineralfasern und Glasfasern (Wärmedämmmatten) oder den obengenannten Naturfasern aufgebaut sind.

Dämmstoffe aus anorganischen Fasern werden technisch durch Verspinnen von Schmelzen der entsprechenden mineralischen Rohstoffe hergestellt, siehe US-A-2,550,465, US-A-2,604,427, US-A-2,830,648, EP-A-354 913 und EP-A-567 480. Die Zusammensetzung wird dann in die frisch hergestellten, noch heißen anorganischen Fasern eingearbeitet. Die Zusammensetzung bleibt dabei im Wesentlichen unausgehärtet als viskose Masse auf den Fasern haften. Eine auf diese Weise hergestellte endlose, bindemittelhaltige Fasermatte wird von geeigneten Förderbändern durch einen Härtungsofen weitertransportiert. Dort härtet die Matte bei Temperaturen im Bereich von ca. 100 bis 200 °C zu einer steifen Matrix aus. Nach dem Härten werden die Dämmstoffmatten in geeigneter Weise konfektioniert.

Der überwiegende Anteil der in den Dämmstoffen verwendeten anorganischen Fasern hat einen Durchmesser im Bereich von 0,5 bis 20 µm und eine Länge im Bereich von 0,5 bis 10 cm.

Außerdem kann man die erfindungsgemäßen Zusammensetzung zur Herstellung von Beschichtungs- und Imprägniermassen für Platten aus organischen und/oder anorganischen Fasern, nicht fasrigen mineralischen Füllstoffen sowie Stärke und/oder wässrigen Polymerisatdispersionen verwenden. Beschichtungs- und Imprägniermassen auf Basis der oben definierten Zusammensetzungen verleihen den Platten einen hohen Biegemodul. Die Herstellung derartiger Platten ist vom Prinzip her bekannt.

Derartige Platten werden üblicherweise als Schalldämmplatten eingesetzt. Die Dicke der Platten liegt üblicherweise im Bereich von etwa 5 bis 30 mm, bevorzugt im Bereich von 10 bis 25 mm. Die Kantenlänge der quadratischen oder rechteckigen Platten liegt üblicherweise im Bereich von 200 bis 2000 mm.

Die Komponenten des erfindungsgemäßen Zusammensetzung sind in der Beschichtungsmasse im Allgemeinen in einer Menge von 1 bis 65 Gew.-% enthalten. Der Anteil der inerten Füllstoffe liegt im Allgemeinen bei 0 bis 85 Gew.-%. Der Wasseranteil der Beschichtungsmasse beträgt in der Regel wenigstens 10 Gew.-%.

Die Anwendung der Beschichtungsmassen erfolgt in üblicher Weise durch Auftragen auf ein Substrat, beispielsweise durch Sprühen, Rollen, Gießen oder Imprägnieren. Die aufgetragenen Mengen, bezogen auf den Trockengehalt der Zusammensetzung, betragen im Allgemeinen 2 bis 100 g/m². Fertigstellung der Beschichtung erfolgt gegebenenfalls nach Vortrocknung durch Härtung bei den oben angegebenen Temperaturen.

Die einzusetzenden Mengen an Zusatzstoffen sind dem Fachmann bekannt und richten sich im Einzelfall nach den gewünschten Eigenschaften und dem Anwendungszweck.

Die nachfolgenden, nicht einschränkenden Beispiele erläutern die Erfindung.

### I Prüfung als Bindemittel für Holzfasern (Beispiele 1 bis 7)

x g Holzfasern (thermomechanisch aufgeschlossenes Fichtenholz, mittlere Faserlänge ca. 3 mm, Restfeuchte 7 %) wurden in einem Kunststoffbehälter aufgeschlagen. Hierzu gab man y g Bindemittel (gerechnet als Feststoff) in Form einer etwa 40 gew.-%igen wässrige Bindemittellösung mittels einer Spritzpistole. Die so beleimten Fasern wurden bei 60 °C auf eine Restfeuchte von etwa 7 % getrocknet. 180 g dieser Mischung wurden in eine Holzform (30 x 30 cm) eingefüllt, mit einer Holzplatte verdichtet, entschalt und mit einer hydraulischen Presse bei einer Presstemperatur von 220 °C für 120 sec zwischen 2 Metallplatten mit 2 mm Abstandshaltern verpresst. Hierzu wurde zunächst 20 sec ein Pressendruck von 50 bar eingestellt. Dann wurde nach einer 10 sec anhaltenden Druckentlastung noch 90 sec lang ein Druck von 200 bar gehalten.

In analoger Weise stellte man Holzfaserplatten unter Verwendung von pulverförmigen Zusammensetzungen her. Hierzu wurden x g der oben beschriebenen Holzfasern mit y g Pulver in einem Kunststoffsack intensiv vermischt und in der oben beschriebenen Weise zu Platten verpresst.

Es wurden die folgenden Zusammensetzungen getestet:
- ZV1: selbstvernetzendes Polyvinylacetat-Pulver, Vinnex LL 572 der Wacker Chemie, Burghausen (Vergleich)
- ZV2: Maleinsäureanhydrid (Vergleich)
- Z1: Maleinsäureamid als Pulver
- Z2: Maleinsäureanhydrid und Ammoniumcarbonat im Gew.-Verhältnis 1:1 als Pulver
- Z3: Maleinsäureammoniumsalz als 40 gew.-%ige Lösung
- Z4: Maleinsäureammoniumsalz + Triethanolamin im Gew.-Verhältnis 1:1 als wässrige Lösung

Die erhaltenen Faserplatten wurden zur Bestimmung der mechanischen Eigenschaften 24 h bzw. 7 Tage im Klimaschrank bei 80°C und 90 % relativer Luftfeuchte gelagert. Anschliessend wurden die Proben hinsichtlich ihrer Festigkeit nach einer Notenskala von 1 bis 6 beurteilt, wobei 1 die beste und 6 die schlechteste Beurteilung ist. Ausserdem wurde die Dickenquellung (in % bezogen auf die ursprüngliche Dicke) und das Durchbiegen der Platten bestimmt. Zur Bestimmung des Durchbiegens der Platten wurden 5 cm x 30 cm große Probekörper auf einer waagrechten Unterlage mit mit einer Stützweite von 23 cm fixiert. Gemessen wurde die Durchbiegung bezogen auf die Waagrechte nach 24 h bzw. 7 Tage im Klimaschrank bei 80°C und 90 % relativer Luftfeuchte.

Außerdem wurden Dickenquellung und Wasseraufnahme bei 2h bzw. 24 h Lagerung in entmineralisiertem Wasser analog DIN 52351 bestimmt. Die Wasseraufnahme entspricht der Gewichtszunahme in %, bezogen auf das ursprüngliche Gewicht. Die Dickenquellung ist als relative Zunahme der Dicke von 2 x 2 cm großen Probenkörper angegeben. Ausserdem wurde im Biegeversuch nach DIN EN 310 bei 23°C und 120°C die Biegefestigkeit und das E-Modul der Platten bestimmt. Die Daten sind in Tabelle 1 zusammengestellt.

**Tabelle 1:**

| Beispiel | V1 | V2 | 1 | 2 | 3 | 4 | 5 | 6 | 7 |
|---|---|---|---|---|---|---|---|---|---|
| Zusammensetzung | ZV1 | ZV2* | Z1 | Z1 | Z1 | Z2 | Z3 | Z3 | Z4 |
| Holzfasern [g] | 170 | 160 | 180 | 170 | 160 | 180 | 180 | 160 | 180 |
| Bindemittelzusammensetzung [g]¹⁾ | 30 | 40 | 20 | 30 | 40 | 20 | 20 | 40 | 25 |

| Prüfung im Klimaschrank | | | | | | | | | |
|---|---|---|---|---|---|---|---|---|---|
| Festigkeit 24 h | - | 3 | 3 | - | 2 | 3 | - | 2 | 3 |
| Festigkeit 7 d | - | 5 | 3 | - | 3 | 4 | - | 3 | 3 |
| Durchbiegen 24 h [mm] | - | 50 | 16 | - | 20 | 29 | - | 9 | 20 |
| Durchbiegen 7 d [mm] | - | > 60 | 32 | - | 55 | 40 | - | 31 | 35 |
| Dickenquellung 7 d [%] | - | 28 | 25 | - | 26 | 27 | - | 19 | 21 |

| Wasserlagerung | | | | | | | | | |
|---|---|---|---|---|---|---|---|---|---|
| Wasseraufnahme 2 h [%] | 154 | 45 | 46 | 59 | 40 | 66 | 40 | 38 | 49 |
| Wasseraufnahme 24 h [%] | 176 | 54 | 54 | 67 | 46 | 75 | 47 | 48 | 64 |
| Dickenquellung 2 h [%] | 113 | 19 | 30 | 28 | 21 | 61 | 18 | 16 | 28 |
| Dickenquellung 24 h [%] | 126 | 22 | 33 | 31 | 23 | 66 | 21 | 18 | 33 |

| Biegeversuch: | | | | | | | | | |
|---|---|---|---|---|---|---|---|---|---|
| Biegefestigkeit 23°C [N/MM²] | 30,5 | 19 | -** | 42,8 | 43,2 | 29,6 | 39,4 | 40,8 | 37,8 |
| Biegefestigkeit 120°C [N/mm²] | 11 | 17,2 | 31,9 | 31 | 23,2 | 29,9 | 33,9 | 28,5 | 26,5 |
| E-Modul 23°C [N/mm²] | 3050 | 3934 | -** | 4645 | 5416 | 3539 | 4340 | 5296 | 4023 |
| E-Modul 120°C [N/mm²] | 1112 | 3096 | 3387 | 3424 | 3225 | 3297 | 4430 | 3896 | 3323 |

| | | | | | | | | | |
|---|---|---|---|---|---|---|---|---|---|
| 1) gerechnet als Feststoff; | | | | | | | | | |
| * beim öffnen der Presse wurde ein reizender Rauch freigesetzt | | | | | | | | | |
| ** Werte wurden nicht bestimmt. | | | | | | | | | |

Die in Beispie 1 hergestellte Faserplatte wurde 1,5h bei 50°C mit 10 gew.-%iger wässriger Natronlauge behandelt. Der Probenkörper zerfiel nahezu vollständig und die Holzfasern wurden durch Filtration zurückgewonnen. Die erhaltene wässrige Lösung des Bindemittels (Lauge) kann einer Kläranlage zugeführt werden, denn die organischen Inhaltsstoffe dieser Lösung sind zumindest zu 60% biologisch abbaubar. Auf diese Weise ist ein unkompliziertes Recycling bzw. Entsorgung der Holzfaserplatten möglich.

### II. Prüfung als Bindemittel für Naturfasermatten (Beispiele 8 bis 11)

Die im folgenden angegebenen Zusammensetzungen wurden mit Wasser auf einen Feststoffgehalt von etwa 35 Gew.-% verdünnt. Etwa 1 cm dicke Jute/Sisal-Matten mit einem Flächengewicht von 1200 g/m² (Hersteller Braunschweiger Jute- und Flachs-Industriebetriebe GmbH) wurden mittels einer Foulard-Walze mit der 35 %-igen Bindemittelflotte imprägniert, so daß, bezogen auf 70 Gew.-Teile trokkenes Fasergewicht, etwa 30 Gew.-Teile nichtflüchtige Bindemittelanteile aufgebracht wurden (siehe Tabelle 1). Die imprägnierten Fasermatten (35x30 cm) wurden in einem Umlufttrockenschrank bei 65°C auf einen Restfeuchtegehalt von etwa 5 %, bezogen auf das Gesamtgewicht der Matte, getrocknet und mit einer hydraulischen Presse bei einer Presstemperatur von 200 °C gemäss dem folgenden Presscyclus verpresst: 1. Pressdruck 0,75 N/mm², 30 sec; 2. Entspännung, 3 sec; 3. Pressdruck 1,5 N/mm², 27 sec.
- Z3: Maleinsäureammoniumsalz als 40 gew.-%ige wässrige Lösung
- Z5: Maleinsäureammoniumsalz + Triethanolamin im Gew.-Verhältnis 5:1 als wässrige Lösung
- Z6: Maleinsäureammoniumsalz + Polymerisat P1¹⁾ im Gewichts-verhältnis 3:1 als wässrige Lösung
- Z7: Maleinsäureammoniumsalz + Styrofan (BASF) + Triethanolamin im Gew.-Verhältnis 5:1,33:1 als wässrige Lösung
1) Polymerisat P1 ist feinteiliges Polymerisat auf Basis Styrol/Butandien in Form einer handelsüblichen wässrigen Polymerdispersion mit einem Feststoffgehalt von etwa 53 Gew.-% und einer Glasübergangstemperatur von etwa 105°C.

Die Wasseraufnahme WA und die Dickenquellung DQ von in Wasser gelagerten Proben sowie die Biegefestigkeit BF und das E-modul wurden bestimmt wie unter I. beschrieben. Die Ergebnisse sind in Tabelle 2 zusammengefasst.

**Tabelle 2**

| Beispiel | 8 | 9 | 10 | 11 |
|---|---|---|---|---|
| Bindemittel | Z3 | Z5 | Z6 | Z7 |
| Gewichtsverhältnis Faser/Bindemittel | 7:3 | 7:3,6 | 7:3 | 7:3,45 |
| Plattendicke [mm] | 1,71 | 1,87 | 1,71 | 1,87 |
| Dichte [g/cm³] | 0,72 | 0,75 | 0,80 | 0,76 |
| WA 2h [%] | 52 | 65 | 36 | 58 |
| WA 24h [%] | 54 | 69 | 41 | 62 |
| DQ 2h [%] | 52 | 77 | 31 | 57 |
| DQ 24h [%] | 57 | 80 | 35 | 60 |
| BF 23 °C [N/mm²] | 34,2 | 25,1 | 27,9 | 34,4 |
| BF 60 °C [N/mm²] | 21,8 | 18,8 | 31,8 | 21,7 |
| BF 120 °C [N/mm²] | 19,6 | 14,8 | 15,1 | 7,6 |
| E-Modul 23 °C [N/mm²] | 6467 | 5253 | 3593 | 5396 |
| E-Modul 60 °C [N/mm²] | 4543 | 3718 | 4975 | 3690 |
| E-Modul 120 °C [N/mm²] | 4543 | 3700 | 3707 | 1342 |

### III. Prüfung als Bindemittel für Korkgranulat (Beispiele 12 bis 19)

In einem Kenwood Labormischer wurden getrocknetes Korkgranulat (gereinigter und gemahlener Kork, Schüttdichte 60g/l, mittlere Partikelgröße 5 mm) und die nachfolgend angegebenen Bindemittelzusammensetzungen in dem in Tabelle 3 angegebenen Gewichtsverhältnissen (jeweils gerechnet als Feststoff) intensiv gemischt (etwa 2 min. Nachrühren nach Bindemittelzugabe). Die mit Bindemittel beaufschlagten Korkpartikel wurden getrocknet (Trockenschrank, 50°C). 140 g der getrockneten Korkpartikel wurden in eine zweiteilige Metallform mit 12,5 x 12,5 x 3 cm Innenabmessungen gefüllt und vorverdichtet. Boden und Stempel der Form waren zum Abführen des freigesetzten Wasserdampfs mit Entlüftungslöcher perforiert. Die Metallform wurde in einer auf 130 °C vorgeheizten Presse für 2h bei einem Pressendruck von 50 bar (0,75 N/mm²) gehalten.

Man erhielt einen Korkblock mit einer Dicke von etwa 3 cm. Die Dickenquellung und Wasseraufnahmen wurde an Probekörpern mit den Abmessungen 5 x 5 x 3,3 cm die in Wasser gelagert wurden, durchgeführt. Die Ergebnisse sind in Tabelle 3 angegeben.
- ZV1: sebstvernetzendes Polyvinylacetat-Pulver, Vinnex LL 572 der Wacker Chemie, Burghausen (Vergleich)
- Z1: Maleinsäureamid als Pulver
- Z2: Maleinsäureanhydrid und Ammoniumcarbonat im Gew.-Verhältnis 1:1 als Pulver
- Z3: Maleinsäureammoniumsalz als 40 gew.-%ige Lösung

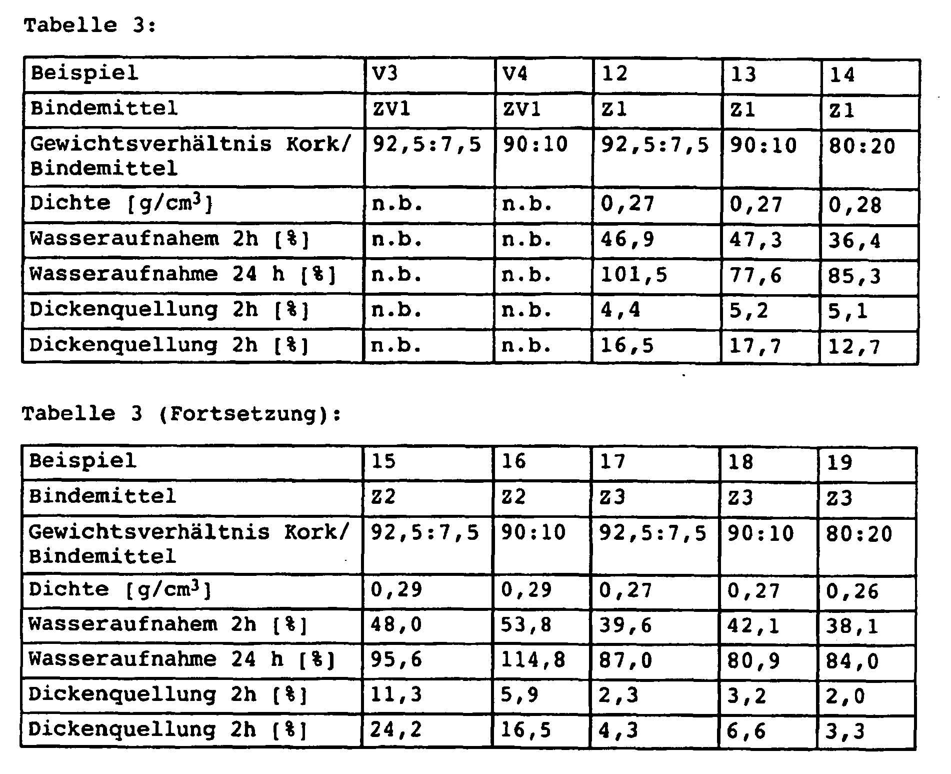

### IV. Prüfung als Bindemittel für feinteilige mineralische Materialien (Beispiele M1 bis M27)

600 g Quarzsand F34 wurden mit den in den Tabellen 4 bis 7 angegebenen Einsatzstoffen vermischt. Das Einmischen wässriger Lösungen erfolgte in einem Kenwood-Labormischer. Das Einmischen von Pulvern erfolgt durch Einfüllen der Bestandteile in einen Plastikbeutel und sorgfältiges Schütteln. Aus den feuchten Mischungen wurden in einer Metallform Prüfkörper (Fischer-Riegel) mit den Abmessungen 17 x 2,3 x 2,3 cm geformt, verdichtet und nach dem Entformen 2 h bei der in den Tabellen angegbenen Temperatur im Umluftofen ausgehärtet. Zum Verdichten wird eine Ramme vom Typ PRA der Georg Fischer AG eingesetzt.

Die Biegefestigkeit der so hergestellten Fischerriegel wurde sofort nach Entnahme aus dem Ofen (BF heiss), im trockenen Zustand bei 23°C (BF 23°C) sowie im nassen Zustand nach einer Stunde Lagerung in entmineralisiertem Wasser bei 23°C mit einem Festigkeitsprüfapparat Typ PFG mit der Prüfvorrichtung PBV (Fa. Georg Fischer, Schaffhausen/CH) bestimmt. Die Ergebnisse sind in den Tabellen 4 bis 6 dargestellt. Ausserdem wurde die Wasseraufnahme der Fischer-Riegel nach einstündiger Wasserlagerung ermittelt.

**Tabelle 4: Variation der Temperatur, Bindemittelmenge und Bindemittelart**

| Versuch | Einsatzstoff¹⁾ [g] | | T [°C]²⁾ | BF 23°C [N/cm²]⁴⁾ | BF heiss [N/cm²]⁵⁾ |
|---|---|---|---|---|---|
| VM1 (Vergleich) | MSA | 60 | 200 | n.b.³⁾ | n.b. |
| M1 | MHA | 30 | 130 | 70 | 30 |
| M2 | MHA | 30 | 150 | 130 | 30 |
| M3 | MHA | 30 | 170 | 135 | 70 |
| M4 | MHA | 30 | 200 | 140 | 70 |
| M5 | MHA | 60 | 170 | 200 | 150 |
| M6 | MHA | 90 | 170 | 115 | 90 |
| M7 | MHA | 60 | 200 | 120 | 80 |
| M8 | MHA | 90 | 200 | 90 | 70 |
| M9 | MSA + | 19,8 | 200 | 20 | 20 |
| | (NH₄)₂CO₃ | 10,2 | | | |
| M10 | MSA + | 39,6 | 200 | 40 | 40 |
| | (NH₄)₂CO₃ | 20,4 | | | |
| M11 | MSA + | 59,4 | 200 | 60 | 50 |
| | (NH₄)₂CO₃ | 30,6 | | | |
| M12 | Aepfelsäure + | 44,4 | 200 | 1020 | 750 |
| | (NH₄)₂CO₃ + | 7,8 | | | |
| | Triethanolamin | 6,0 | | | |
| M13 | Aepfelsäure + | 88,8 | 200 | >1200 | >1300 |
| | (NH₄)₂CO₃ + | 15,6 | | | |
| | Triethanolamin | 12,0 | | | |
| VM2 (Vergleich) | Citronensäure + | 120 | 200 | n.B. | n.b. |
| | Triethanolamin | 12,0 | | | |
| M14 | Citronensäure + | 48,0 | 200 | 1050 | 680 |
| | (NH₄)₂CO₃ + | 6,0 | | | |
| | Triethanolamin | 6,0 | | | |
| M15 | Citronensäure + | 96,0 | 200 | >1300 | >1300 |
| | (NH₄)₂CO₃ + | 12,0 | | | |
| | Triethanolamin | 12,0 | | | |
| M16 | MHA + | 23,0 | 170 | 635 | 650 |
| | Triethanolamin | 7,0 | | | |

| | | | | | |
|---|---|---|---|---|---|
| 1) MSA = Maleinsäureanhydrid; MHA Maleinsäurehalbamid | | | | | |
| 2) Ofentemperatur | | | | | |
| 3) n.b.: Wert nicht bestimmbar, da Probenkörper zerfallen | | | | | |
| 4) Biegefestigkeit bei 23°C | | | | | |
| 5) Biegefestigkeit im heissen Zustand nach Entnahme aus dem Ofen | | | | | |

**Tabelle 5:**

| Versuch | Bindemittel ¹⁾ [g] | | T ²⁾ [°C] | WA ³⁾ [%] | BFₙₐₛₛ⁴⁾ [N/cm²] | BF_{trocken} ⁵⁾ [N/cm²] |
|---|---|---|---|---|---|---|
| M17 | Z6 | 69,1 | 170 | 23,7 | 730 | 1170 |
| | | | | 23,6 | 710 | |
| M18 | Z5 | 72,6 | 170 | 23,3 | 390 | 380 |
| | | | | 23,4 | 370 | |
| M19 | Z7 | 66,1 | 170 | 23,7 | 480 | 1300 |
| | | | | 23,8 | 680 | |
| M20 | Z8 | 63,5 | 170 | 23,5 | 740 | 1240 |
| | | | | 23,8 | 760 | |
| M21 | Z9 | 61,2 | 170 | 23,5 | 580 | 1290 |
| | | | | 23,7 | 640 | |
| M22 | Z6 | 69,1 | 200 | 24,1 | 1040 | 1200 |
| | | | | 23,8 | 970 | |
| M23 | Z5 | 72,6 | 200 | 25,4 | 850 | 900 |
| | | | | 25,2 | 880 | |
| M24 | Z7 | 66,1 | 200 | 12,8 | 1160 | 1300 |
| | | | | 19,2 | 1100 | |
| M25 | z8 | 63,5 | 200 | 16,5 | 1160 | 1300 |
| | | | | 11,6 | 1200 | |
| M26 | Z9 | 61,2 | 200 | 23,0 | 980 | 1290 |
| | | | | 23,0 | 1000 | |
| M27 | Z6 | 69,1 | 150 | 25,8 | 220 | 460 |
| | | | | 25,6 | 230 | |

| | | | | | | |
|---|---|---|---|---|---|---|
| 1) Z5 Maleinsäureammoniumsalz + Triethanolamin im Gew.-Verhältnis 5:1 als wässrige Lösung Z6 Maleinsäureammoniumsalz + Triethanolamin im Gew.-Verhältnis 10:1 als wässrige Lösung Z7 Maleinsäureammoniumsalz + Triethanolamin im Gew.-Verhältnis 10:3 als wässrige Lösung Z8 Maleinsäureammoniumsalz + Triethanolamin im Gew.-Verhältnis 2,5:1 als wässrige Lösung Z9 Maleinsäureammoniumsalz + Triethanolamin im Gew.-Verhältnis 2:1 als wässrige Lösung | | | | | | |
| 2) Ofentemperatur | | | | | | |
| 3) Wasseraufnahme nach 60 min | | | | | | |
| 4) Biegefestigkeit in nassem Zustand (Doppelbestimmung) | | | | | | |
| 5) Biegefestigkeit in trockenem Zustand bei 23°C | | | | | | |

Ausserdem wurden die folgenden oligomeren Bindemittel Z10 bis Z14 hergestellt und als Bindemittel für Quarzsand getestet:

### Herstellung von Z10:

In einem Glaskolben wurde Maleinsäurehalbamid mittels eines 150°C heissen Ölbads bis zum Einsetzen einer exothermen Reaktion (erkennbar an einer spontanen orange-Färbung) aufgeschmolzen. Der Kolben wurde in flüssigem Stickstoff abgekühlt, zerschlagen und der Kolbeninhalt in Wasser aufgenommen. Man erhielt eine 50 gew.-%ige wässrige Lösung des Bindemittels.

### Herstellung von Z11:

Die Herstellung erfolgte ähnlich wie von Z12, jedoch liess man das Maleinsäurehalbamid weitere 30 min. bei 150°C reagieren. Man erhielt eine 50 gew.-%ige wässrige Lösung des Bindemittels.

### Herstellung von Z12:

In einem Glaskolben wurde eine Mischung aus Maleinsäurehalbamid und Triethanolamin im Gewichtsverhältnis 5:1 mittels eines 150°C heissen Ölbads bis zum Einsetzen einer exothermen Reaktion (s.o.) aufgeschmolzen. Der Kolben wurde in flüssigem Stickstoff abgekühlt, zerschlagen und der Kolbeninhalt in Wasser aufgenommen. Man erhielt eine 50 gew.-%ige wässrige Lösung des Bindemittels.

### Herstellung von Z13:

In einem Glaskolben wurden 5 Gewichtsteile Maleinsäurehalbamid mittels eines 150°C heissen Ölbads bis zum Einsetzen einer exothermen Reaktion (s.o.) aufgeschmolzen. Dann gab man 1 Gew.-Teil Triethanolamin zu, schreckte den Kolben in flüssigem Stickstoff ab, zerschlug den Kolben und nahm den Kolbeninhalt in Wasser auf. Man erhielt eine 50 gew.-%ige wässrige Lösung des Bindemittels.

### Herstellung von Z14:

Die Herstellung erfolgte ähnlich wie von Z13, jedoch liess man das Maleinsäurehalbamid vor der Triethanolamin-Zugabe zunächst 30 min. bei 150°C reagieren. Man erhielt eine 50 gew.-%ige wässrige Lösung des Bindemittels.

Die Bindemittel Z10 bis Z14 wurden mit 450 g Quarzsand F34 in den in Tabelle 6 angegebenen Mengenverhältnissen gemischt und zu Fischerriegeln verarbeitet. Die Eigenschaften der erhaltenen Riegel sind ebenfalls in Tabelle 6 angegeben. Die Messmehtoden entsprechen den unter IV angegebenen Methoden.

**Tabelle 6:**

| Versuch | Bindemittel ¹⁾ [g] | | T ²) [°C] | WA ³⁾ [%] | BFₙₐₛₛ ⁴⁾ [N/cm²] | BF_{trocken} ⁵⁾ [N/cm²] |
|---|---|---|---|---|---|---|
| M28 | Z10 | 90 | 200 | n.b. | n.b.⁶⁾ | 90 |
| M29 | Z12 | 90 | 200 | 21,5 | 110 | 560 |
| M30 | Z10 + | 30 | 200 | 15,1 | 640 | 810 |
| | Z13 | 450 | | | | |
| M31 | Z11 + | 72,6 | 170 | 11,8 | 990 | 1190 |
| | Z14 | 450 | | | | |

| | | | | | | |
|---|---|---|---|---|---|---|
| 1) Bindemitteltyp siehe Herstellungsbeispiele | | | | | | |
| 2) Ofentemperatur | | | | | | |
| 3) Wasseraufnahme nach 60 min | | | | | | |
| 4) Biegefestigkeit in nassem Zustand (Doppelbestimmung) | | | | | | |
| 5) Biegefestigkeit in trockenem Zustand bei 23°C | | | | | | |

## Patentansprüche

1. Verwendung von Zusammensetzungen, enthaltend:
- wenigstens ein Umsetzungsprodukt aus
i. wenigstens einer Polycarbonsäure der allgemeinen Formel I: 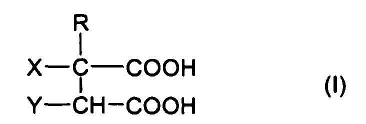 worin
R für Wasserstoff oder eine Gruppe CH₂COOH steht,
X OH oder NH₂ bedeutet, wenn Y für Wasserstoff steht,
Y OH oder NH₂ bedeutet, wenn X für Wasserstoff steht, oder
X und Y gemeinsam für eine π-Bindung stehen,
und/oder einem Anhydrid der Polycarbonsäure I mit
ii. Ammoniak und gegebenenfalls
iii. primären Aminen und/oder Aminen oder Amiden mit wenigstens zwei Hydroxy-C₂-C₄-alkylgruppen;
und/oder
- eine Mischung aus wenigstens einer Polycarbonsäure der allgemeinen Formel I und/oder ihrem Anhydrid und wenigstens einer beim Erwärmen Ammoniak freisetzenden Substanz und gegebenenfalls primären Aminen und/oder Aminen oder Amiden mit wenigstens zwei Hydroxy-C₂-C₄-alkylgruppen;
als thermisch härtbares Bindemittel zur Herstellung von Formkörpern aus feinteiligen Materialien und zum Verfestigen von Flächengebilden aus Fasermaterialien.

2. Verwendung nach Anspruch 1, wobei das Umsetzungsprodukt der Komponenten i und ii ausgewählt ist unter den Mono- und Diamiden, den Mono- und Diammoniumsalzen sowie den Monoamid-Ammoniumsalzen der Maleinsäure und der Fumarsäure.

3. Verwendung nach Anspruch 1 oder 2, wobei das Umsetzungsprodukt ein wasserlösliches Oligomer ist, welches durch Erwärmen eines Mono- oder Diamids, eines Mono- oder Diammoniumsalzes oder eines Monoamid-Ammoniumsalzes einer Polycarbonsäure der Formel I erhältlich ist.

4. Verwendung nach einem der vorhergehenden Ansprüche, wobei die Zusammensetzung zusätzlich ein feinteiliges, filmbildendes Polymerisat ethylenisch ungesättigter Monomere enthält.

5. Verwendung nach einem der vorhergehenden Ansprüche, wobei die Zusammensetzung zusätzlich wenigstens ein Amin oder Amid mit wenigstens zwei Hydroxy-C₂-C₄-alkylgruppen enthält.

6. Thermisch härtbare Zusammensetzung, enthaltend:
- wenigstens ein Umsetzungsprodukt aus
i. wenigstens einer Polycarbonsäure der allgemeinen Formel I: 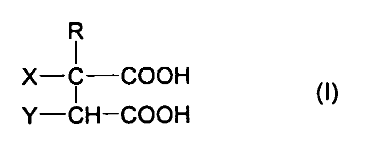 worin
R für Wasserstoff oder eine Gruppe CH₂COOH steht,
X OH oder NH₂ bedeutet, wenn Y für Wasserstoff steht,
Y OH oder NH₂ bedeutet, wenn X für Wasserstoff steht, oder
X und Y gemeinsam für eine π-Bindung stehen,
und/oder einem Anhydrid der Polycarbonsäure I mit
ii. Ammoniak und gegebenenfalls mit
iii. primären Aminen und/oder Aminen oder Amiden mit wenigstens zwei Hydroxy-C₂-C₄-alkylgruppen;
und/oder
- eine Mischung aus wenigstens einer Polycarbonsäure der allgemeinen Formel I und/oder ihrem Anhydrid und wenigstens einer beim Erwärmen Ammoniak freisetzenden Substanz und gegebenenfalls primären Aminen und/oder Aminen oder Amiden mit wenigstens zwei Hydroxy-C₂-C₄-alkylgruppen;
und neben den vorgenannten Bestandteilen
- wenigstens einen weiteren Bestandteil, ausgewählt unter feinteiligen filmbildenden Polymerisaten ethylenisch ungesättigter Monomere.

7. Zusammensetzung nach Anspruch 6, wobei das Umsetzungsprodukt ausgewählt ist unter den Mono- und Diamiden, den Mono- und Diammoniumsalzen sowie den Monoamid-Ammoniumsalzen der Maleinsäure und der Fumarsäure.

8. Verfahren zur Herstellung von Formkörpern aus feinteiligen Materialien, **dadurch gekennzeichnet, dass** man das feinteilige Material mit einer Zusammensetzung, wie in einem der Ansprüche 1 bis 7 definiert, imprägniert oder vermischt und die so erhaltene Mischung bei Temperaturen oberhalb 120 °C formt.

9. Verfahren nach Anspruch 8, **dadurch gekennzeichnet, dass** man das Bindemittel in einer Menge von 2 Gew.-% bis 100 Gew.-%, bezogen auf 100 Gew.-% feinteiliges Material einsetzt.

10. Verfahren nach einem der Ansprüche 8 oder 9, **dadurch gekennzeichnet, dass** man das Bindemittel als Pulver einsetzt.

11. Verfahren nach einem der Ansprüche 8 bis 10, **dadurch gekennzeichnet, dass** das feinteilige Material in Form von Fasern, Spänen, Schnitzeln oder körnigen Materialien eingesetzt wird.

12. Verfahren zum Verfestigen von Flächengebilden aus Fasermaterialien, **dadurch gekennzeichnet, dass** man ein unverfestigtes Flächengebilde aus Fasermaterialien mit einer Zusammensetzung gemäß einem der Ansprüche 1 bis 7 behandelt und anschließend auf Temperaturen oberhalb 120 °C erwärmt.

13. Verfahren nach Anspruch 12, **dadurch gekennzeichnet, dass** man die Zusammensetzung in Form einer wässrigen Lösung oder Dispersion einsetzt.

14. Formkörper, erhältlich durch ein Verfahren gemäß einem der Ansprüche 8 bis 11.

15. Flächengebilde, erhältlich durch ein Verfahren gemäß Anspruch 12.

## Claims

1. The use of compositions comprising:
- at least one reaction product of
i. at least one polycarboxylic acid of the general formula I: 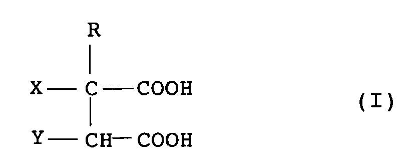 in which
R is hydrogen or a CH₂COOH group,
X is OH or NH₂ if Y is hydrogen,
Y is OH or NH₂ if X is hydrogen, or
X and Y together are a π bond,
and/or an anhydride of the polycarboxylic acid I with
ii. ammonia and, if desired,
iii.primary amines and/or amines or amides containing at least two C₂-C₄ hydroxyalkyl groups; and/or
- a mixture of at least one polycarboxylic acid of the general formula I and/or its anhydride and at least one substance which releases ammonia on heating and, if desired, primary amines and/or amines or amides containing at least two C₂-C₄ hydroxyalkyl groups;
as a heat-curable binder for producing moldings from finely divided materials and for consolidating sheetlike structures of fiber materials.

2. The use as claimed in claim 1, wherein the reaction product of the components i and ii is selected from the monoamides and diamides, the monoammonium and diammonium salts, and the monoamide ammonium salts of maleic acid and of fumaric acid.

3. The use as claimed in claim 1 or 2, wherein the reaction product is a water-soluble oligomer obtainable by heating a monoamide or diamide, a monoammonium or diammonium salt or a monoamide ammonium salt of a polycarboxylic acid of the formula I.

4. The use as claimed in any of the preceding claims, wherein the composition further comprises a finely divided filmforming polymer of ethylenically unsaturated monomers.

5. The use as claimed in any of the preceding claims, wherein the composition further comprises at least one amine or amide containing at least two C₂-C₄ hydroxyalkyl groups.

6. A heat-curable composition comprising
- at least one reaction product of
i. at least one polycarboxylic acid of the general formula I: 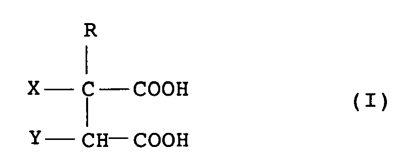 in which
R is hydrogen or a CH₂COOH group,
X is OH or NH₂ if Y is hydrogen,
Y is OH or NH₂ if X is hydrogen, or
X and Y together are a π bond,
and/or an anhydride of the polycarboxylic acid I with
ii. ammonia and, if desired,
iii.primary amines and/or amines or amides containing at least two C₂-C₄ hydroxyalkyl groups; and/or
- a mixture of at least one polycarboxylic acid of the general formula I and/or its anhydride and at least one substance which releases ammonia on heating and, if desired, primary amines and/or amines or amides containing at least two C₂-C₄ hydroxyalkyl groups;
and besides the aforementioned constituents
- at least one further constituent selected from finely divided filmforming polymers of ethylenically unsaturated monomers.

7. A composition as claimd in claim 6, wherein the reaction product is selected from the monoamides and diamides, the monoammonium and diammonium salts, and the monoamide ammonium salts of maleic acid and of fumaric acid.

8. A process for producing a molding of finely divided materials, which comprises impregnating or mixing the finely divided material with a composition as defined in any of claims 1 to 7 and shaping the resultant mixture at temperatures above 120°C.

9. A process as claimed in claim 8, wherein the binder is used in an amount of from 2% by weight to 100% by weight, based on 100% by weight of finely divided material.

10. A process as claimed in either of claims 8 or 9, wherein the binder is used as a powder.

11. A proces as claimed in any of claims 8 to 10, wherein the finely divided material is used in the form of fibers, chips, slivers or granular materials.

12. A method of consolidating sheetlike structures of fiber materials, which comprises treating an unconsolidated sheetlike structure of fiber materials with a composition as claimed in any of claims 1 to 7 and then heating the system at temperatures above 120°C.

13. A method as claimed in claim 12, wherein the composition is used in the form of an aqueous solution or dispersion.

14. A molding obtainable by a process as claimed in any of claims 8 to 11.

15. A sheetlike structure obtainable by a method as claimed in claim 12.

## Revendications

1. Utilisation de compositions contenant :
- au moins un produit de la réaction
i. d'au moins un acide polycarboxylique de la formule générale I : 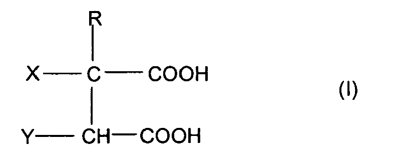 dans laquelle
R représente de l'hydrogène ou un groupe CH₂COOH,
X représente OH ou NH₂, lorsque Y représente de l'hydrogène,
Y représente OH ou NH₂ lorsque X représente de l'hydrogène, ou
X et Y représentent conjointement une liaison π,
et/ou d'un anhydride de l'acide polycarboxylique I, avec
ii. de l'ammoniac, et éventuellement
iii. des amines primaires et/ou des amines ou des amides comportant au moins deux groupes hydroxy-C₂-C₄-alkyle, et/ou
- un mélange d'au moins un acide polycarboxylique de la formule générale I et/ou de son anhydride et d'au moins une substance libérant de l'ammoniac lors d'un échauffement et éventuellement d'amines primaires et/ou d'amines ou d'amides comportant au moins deux groupes hydroxy-C₂-C₄-alkyle,
comme liant thermiquement durcissable pour la préparation de corps façonnés en matériaux finement divisés ou pour la consolidation de produits plans en matières fibreuses.

2. Utilisation suivant la revendication 1, dans laquelle le produit de la réaction des composants i et ii est choisi parmi les monoamides et diamides, les sels de monoammonium et de diammonium ainsi que les sels d'ammonium-monoamide de l'acide maléique et de l'acide fumarique.

3. Utilisation suivant la revendication 1 ou 2, dans laquelle le produit de la réaction est un oligomère soluble dans l'eau qui peut être obtenu par échauffement d'un monoamide ou diamide, d'un sel de monoammonium ou de diammonium ou d'un sel d'ammonium-monoamide d'un acide polycarboxylique de la formule I.

4. Utilisation suivant l'une des revendications précédentes, dans laquelle la composition contient en supplément un polymère filmogène, finement divisé de monomères éthyléniquement insaturés.

5. Utilisation suivant l'une des revendications précédentes, dans laquelle la composition contient en supplément au moins un amine ou un amide comportant au moins deux groupes hydroxy-C₂-C₄-alkyle.

6. Composition thermiquement durcissable, contenant :
- au moins un produit de la réaction
i. d'au moins un acide polycarboxylique de la formule générale I : 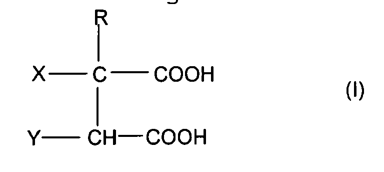 dans laquelle
R représente de l'hydrogène ou un groupe CH₂COOH,
X représente OH ou NH₂, lorsque Y représente de l'hydrogène,
Y représente OH ou NH₂ lorsque X représente de l'hydrogène, ou
X et Y représentent conjointement une liaison π,
et/ou d'un anhydride de l'acide polycarboxylique I, avec
ii. de l'ammoniac, et éventuellement avec
iii. des amines primaires et/ou des amines ou des amides comportant au moins deux groupes hydroxy-C₂-C₄-alkyle,
et/ou
- un mélange d'au moins un acide polycarboxylique de la formule générale I et/ou de son anhydride et d'au moins une substance libérant de l'ammoniac lors d'un échauffement et éventuellement d'amines primaires et/ou d'amines ou d'amides comportant au moins deux groupes hydroxy-C₂-C₄-alkyle,
et, à côté des éléments précités,
- au moins un autre composant, choisi parmi des polymères filmogènes finement divisés de monomères éthyléniquement insaturés.

7. Composition suivant la revendication 6, dans laquelle le produit de la réaction est choisi parmi les monoamides et diamides, les sels de monoammonium ou de diammonium ainsi que les sels d'ammonium-monoamide de l'acide maléique et de l'acide fumarique.

8. Procédé de préparation de corps façonnés en matériaux finement divisés, **caractérisé en ce qu'**on imprègne ou mélange le matériau finement divisé avec une composition telle que définie dans une des revendications 1 à 7 et on met en forme le mélange ainsi obtenu à des températures supérieures à 120°C.

9. Procédé suivant la revendication 8, **caractérisé en ce qu'**on met en oeuvre le liant en une quantité de 2 % en poids à 100 % en poids, par rapport à 100 % en poids de matériau finement divisé.

10. Procédé suivant l'une des revendications 8 ou 9, **caractérisé en ce qu'**on met en oeuvre le liant sous la forme de poudre.

11. Procédé suivant l'une des revendications 8 à 10, **caractérisé en ce que** le matériau finement divisé est mis en oeuvre sous la forme de fibres, de copeaux, de rognures ou de matériaux granulaires.

12. Procédé de consolidation de produits plans en matières fibreuses, **caractérisé en ce qu'**on traite un produit plan en matière fibreuse non consolidé avec une composition suivant l'une des revendications 1 à 7 et on chauffe ensuite à des températures supérieures à 120°C.

13. Procédé suivant la revendication 12, **caractérisé en ce qu'**on met en oeuvre la composition sous la forme d'une solution ou dispersion aqueuse.

14. Corps façonné, que l'on peut obtenir par un procédé suivant l'une des revendications 8 à 11.

15. Produit plan, que l'on peut obtenir par un procédé suivant la revendication 12.
